# EUROPEAN PATENT SPECIFICATION

(11) **EP 4 351 029 B1**
(45) Date of publication and mention of the grant of the patent: **20.05.2026**
(21) Application number: 22836908.8
(22) Date of filing: 05.07.2022
(51) Int. Cl.: H04B 7/06, H04B 1/40

(54) **SIGNAL TRANSMISSION METHOD AND WIRELESS COMMUNICATION DEVICE**
SIGNALÜBERTRAGUNGSVERFAHREN UND DRAHTLOSKOMMUNIKATIONSVORRICHTUNG
PROCÉDÉ DE TRANSMISSION DE SIGNAL ET DISPOSITIF DE COMMUNICATION SANS FIL

(30) Priority: 09.07.2021 CN 202110780804
(43) Date of publication of application: 10.04.2024
(73) Proprietor: Huawei Technologies Co., Ltd., Shenzhen, Guangdong 518129 (CN)
(72) Inventor: LIU, Chang, Shenzhen, Guangdong 518129 (CN); HUANG, Fei, Shenzhen, Guangdong 518129 (CN); SUN, Tianhui, Shenzhen, Guangdong 518129 (CN); SHI, Pingyang, Shenzhen, Guangdong 518129 (CN); ZHONG, Wenhao, Shenzhen, Guangdong 518129 (CN)
(74) Representative: Pfenning, Meinig & Partner mbB
(86) International application number: PCT/CN2022/103909
(87) International publication number: WO 2023/280159

(56) References cited:
- WO-A1-2021/042892
- CN-A- 110 336 577
- CN-A- 110 336 577
- CN-A- 112 152 643
- CN-A- 112 533 257
- CN-A- 112 688 715
- CN-U- 204 761 429
- US-B2- 10 574 285

## Description

### TECHNICAL FIELD

Embodiments of this application relate to the communication field, and in particular, to a signal transmission method, a wireless communication apparatus, a radio frequency front-end module, a chip, a computer-readable storage medium and a computer program product.

### BACKGROUND

Currently, when many 5G (5th Generation Mobile Communication Technology, 5th generation mobile communication technology) terminal devices are in an EN-DC scenario (an LTE (Long Term Evolution, long term evolution)-NR (New Radio, new radio) dual connectivity scenario), 4G (4th Generation Mobile Communication Technology, 4th generation mobile communication technology) communication and 5G communication may be performed. Four antennas are disposed in the terminal device, two antennas are configured to receive and transmit a 4G signal, and the remaining two antennas are configured to receive and transmit a 5G signal. In 5G, an SRS (Sounding Reference Signal, sounding reference signal) can be transmitted in turn, where 1T2R SRS ("T" transmit, transmit; "R" receive, receive) indicates transmitting an SRS signal through two receive antennas in turn, and 1T4R SRS indicates transmitting an SRS signal through four receive antennas in turn. When 1T4R SRS is used, a base station can obtain uplink channel information transmitted by all four antennas. Compared with that in 1T2R SRS, the uplink channel information obtained by the base station is more comprehensive, so that the base station performs channel estimation more accurately, thereby performing more accurate downlink resource allocation and increasing a downlink peak rate.

If the terminal device uses 1T4R SRS, although the downlink peak rate can be increased, antennas for transmitting and receiving a 4G signal are occupied. As a result, the two antennas cannot transmit a 4G signal, and an LTE service is interrupted. Consequently, a rate of the LTE service decreases, or even a connection is interrupted. If the terminal device uses 1T2R SRS, although the antennas for transmitting and receiving a 4G signal are not occupied, the downlink peak rate is decreased.

CN 110336577 describes a radio frequency circuit and terminal equipment that aim to solve the problem that when the existing radio frequency circuit switches a transmitting antenna of a first network or a second network, the same transmitting antenna is scrambled, so that the using conflict of the transmitting antenna causes the deterioration of the communication quality.

WO 2021/042892 describes a network radio-frequency structure comprises: a radio-frequency transceiver; a first radio-frequency module connected to the radio-frequency transceiver, wherein the first radio-frequency module is connected to a first antenna and a second antenna by means of a first DPDT switch; and a second radio-frequency module connected to the radio-frequency transceiver, wherein the second radio-frequency module is connected to a third antenna and a fourth antenna by means of a first switch unit.

CN 112152643 describes an antenna switching circuit that can be applied in the nonstandalone (NSA) scenario, and when the radio frequency processing module has only one transmission channel applied to the 5G frequency band, switching between multiple antennas and radio frequency channels is realized.

### SUMMARY

To resolve the foregoing technical problem, this application provides a signal transmission method, a wireless communication apparatus, a radio frequency front-end module, a chip, a computer-readable storage medium and a computer program product. According to the method, a service of a second network is not interrupted when an SRS of a first network is transmitted by using four paths in turn. The scope of protection of the present invention is set out by the appended claims.

### BRIEF DESCRIPTION OF DRAWINGS

FIG. 1 is a diagram of an example of an application scenario according to an embodiment of this application;
FIG. 2 is a schematic diagram of an example of a structure of a wireless communication apparatus according to an embodiment of this application;
FIG. 3 is a schematic diagram of an example of switch statuses corresponding to a case in which a wireless communication apparatus transmits an SRS by using four paths in turn;
FIG. 4 is a schematic diagram of an example of a structure of another wireless communication apparatus according to an embodiment of this application;
FIG. 5 is a schematic diagram of an example of a structure of a still another wireless communication apparatus according to an embodiment of this application;
FIG. 6 is a schematic diagram of an example of a structure of a yet another wireless communication apparatus according to an embodiment of this application;
FIG. 7 is a schematic diagram of an example of a structure of an apparatus; and
FIG. 8 is a schematic diagram of an example of a structure of a chip.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a particular order of the target objects.

In embodiments of this application, the word like "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word like "example" or "for example" is intended to present a related concept in a specific manner.

In the descriptions of embodiments of this application, unless otherwise stated, "a plurality of" means two or more than two. For example, a plurality of processing units mean two or more processing units; and a plurality of systems mean two or more systems.

Embodiments of this application may be applied to an LTE-NR scenario. For example, embodiments of this application may be applied to an EN-DC scenario (a scenario in the LTE-NR scenario).

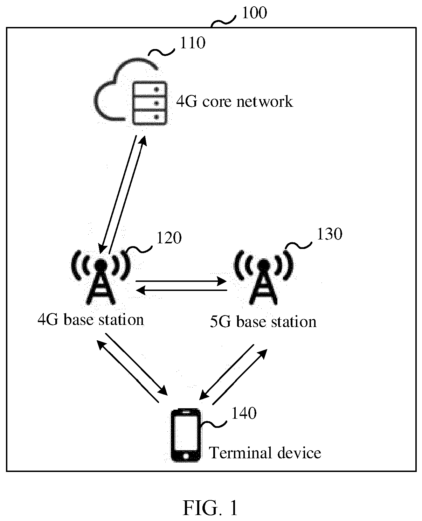

FIG. 1 is a diagram of an example of an application scenario according to an embodiment of this application. A wireless communication system 100 in an EN-DC scenario may include a 4G core network 110, a 4G base station 120, a 5G base station 130, and a terminal device 140. The 4G base station 120 serves as a primary base station to access the 4G core network 110, the 5G base station 130 serves as a secondary base station to connect to the 4G base station 120, and the terminal device 140 may be separately connected to the 4G base station 120 and the 5G base station 130.

When the terminal device is in the EN-DC scenario, the terminal device may perform 4G communication and 5G communication at the same time. In a process of performing 5G communication, the terminal device 140 may transmit a 5G SRS to the 5G base station 130. After the 5G base station 130 receives the 5G SRS transmitted by the terminal device 140, uplink channel estimation may be performed based on the 5G SRS, and then downlink resource allocation is performed based on an uplink channel estimation result.

The terminal device supports two in-turn transmission policies: 1T2R and 1T4R. Compared with the 1T2R in-turn transmission policy, the 1T4R in-turn transmission policy has a higher downlink peak rate. Usually, for a 4-antenna terminal device in the conventional technology, two antennas are used for 4G communication, and two antennas are used for 5G communication. If the 1T4R in-turn transmission policy is used, a 4G service is interrupted. Therefore, to avoid impact on the 4G service of the terminal device when the 1T4R in-turn transmission policy is used, the 4-antenna terminal device usually uses the 1T2R in-turn transmission policy. In this way, a downlink peak rate of the terminal device is affected. In addition, in the conventional technology, two antennas are further added on the basis of four antennas, to obtain a 6-antenna terminal device. Two antennas of the 6-antenna terminal device are used for 4G communication, and four antennas are used for 5G communication. Therefore, the 6-antenna terminal device may use the 1T4R in-turn transmission. However, space of the terminal device is limited. If two antennas are added, space for the two antennas is relatively small, antenna performance is poor, and costs of the terminal device are also increased.

In view of a disadvantage in the conventional technology, embodiments of this application provide a wireless communication apparatus. The wireless communication apparatus may be disposed in the terminal device 140, and can transmit an SRS by using the 1T4R in-turn transmission policy without interrupting the 4G service, to ensure the downlink peak rate.

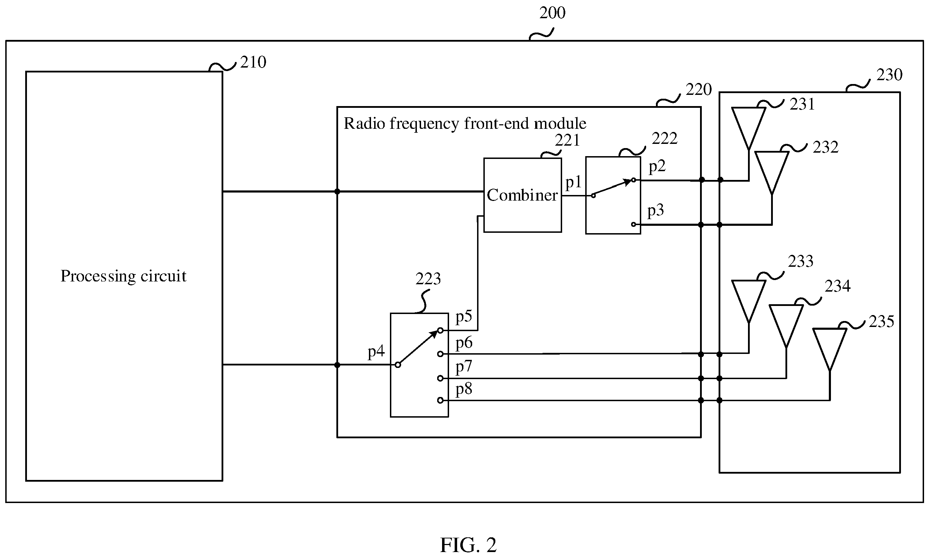

FIG. 2 is a schematic diagram of an example of a structure of a wireless communication apparatus according to an embodiment of this application. A wireless communication apparatus 200 shown in FIG. 2 is only an example of the wireless communication apparatus, and the wireless communication apparatus 200 may have more or fewer components than those shown in the figure, may combine two or more components, or may have different component configurations. Various components shown in FIG. 2 may be implemented in hardware including one or more signal processing and/or application-specific integrated circuits, software, or a combination of hardware and software.

The wireless communication apparatus 200 may include a processing circuit 210, a radio frequency front-end module 220, and an antenna group 230.

For example, the processing circuit 210 may be coupled to the radio frequency frontend module 220, and the radio frequency front-end module 220 may be coupled to the antenna group 230.

For example, the processing circuit 210 may include a radio frequency processing circuit like a transceiver, and may be configured to receive a baseband signal from a baseband processing circuit, perform radio frequency modulation on the baseband signal to obtain a signal obtained through radio frequency modulation, and send the signal to the radio frequency front-end module. The radio frequency processing circuit may be further configured to receive a signal from the radio frequency front-end module, perform radio frequency demodulation on the signal to obtain a signal obtained through radio frequency demodulation, and send the signal to the baseband processing circuit for processing.

For example, the processing circuit 210 may include the baseband processing circuit and the radio frequency processing circuit. The baseband processing circuit is coupled to the radio frequency processing circuit. The baseband processing circuit may be configured to receive an original signal from a central processing circuit, perform baseband modulation on the original signal to obtain a baseband signal, and send the baseband signal to the radio frequency processing circuit. The radio frequency processing circuit may be configured to receive a baseband signal from the baseband processing circuit, perform radio frequency modulation on the baseband signal, to obtain a signal obtained through radio frequency modulation, and send the signal to the radio frequency front-end module 220. The radio frequency processing circuit may be configured to receive a signal from the radio frequency front-end module 220, perform radio frequency demodulation on the signal, to obtain a signal obtained through radio frequency demodulation, and send the signal to the baseband processing circuit. The baseband processing circuit may be further configured to receive, from the radio frequency processing circuit, a signal obtained through radio frequency demodulation, perform baseband demodulation on the signal obtained through radio frequency demodulation, to obtain a signal obtained through baseband demodulation, and send the signal to the central processing unit circuit for processing.

For example, the processing circuit 210 may include the central processing circuit, the baseband processing circuit, and the radio frequency processing circuit. The central processing circuit may be coupled to the baseband processor, and the baseband processing circuit may be coupled to the radio frequency processing circuit. The central processing circuit may be configured to generate or obtain an original signal and send the original signal to the baseband processing circuit. The baseband processing circuit may be configured to receive an original signal from the central processing circuit, perform baseband modulation on the original signal to obtain a baseband signal, and send the baseband signal to the radio frequency processing circuit. The radio frequency processing circuit may be configured to perform radio frequency modulation on a baseband signal, to obtain a signal obtained through radio frequency modulation, and send the signal to the radio frequency front-end module 220. The radio frequency processing circuit may be further configured to receive a signal from the radio frequency front-end module 220, perform radio frequency demodulation on the signal, to obtain a signal obtained through radio frequency demodulation, and send the signal to the baseband processing circuit. The baseband processing circuit may be further configured to perform baseband demodulation on a signal obtained through radio frequency demodulation, to obtain a signal obtained through baseband demodulation, and send the signal to the central processing unit circuit. The central processing circuit may be further configured to process and output a signal obtained through baseband demodulation. For example, the wireless communication apparatus 200 is a terminal device, a signal obtained through baseband demodulation is a voice signal, and the central processing circuit may output the voice signal to a speaker for playing. For another example, a signal obtained through baseband demodulation is a text/picture, and the central processing circuit may output the text/picture to a display component for display.

For example, the antenna group 230 may be configured to receive and transmit a radio frequency signal.

For example, the antenna group 230 may include a first antenna 231, a second antenna 232, a third antenna 233, a fourth antenna 234, and a fifth antenna 235.

For example, the radio frequency front-end module 220 may be configured to receive a signal from the processing circuit 210, convert the received signal into a radio frequency signal, and then transmit the radio frequency signal by using an antenna; and may be further configured to receive a radio frequency signal from the antenna, perform processing such as filtering and amplification on the signal, and input a processed signal to the processing circuit 210.

For example, the radio frequency front-end module 220 may include a combiner 221, a first switch 222, and a second switch 223.

For example, the combiner 221 may include a plurality of bidirectional ports, and may be configured to input and output a signal.

For example, the combiner 221 may include two groups of ports: a first group of ports and a second group of ports. When the first group of ports are used for input, the second group of ports are used for output. When the second group of ports are used for input, the first group of ports are used for output. For example, when the wireless communication apparatus 200 transmits a signal, the first group of ports may be used for input, and the second group of ports may be used for output. When the antenna of the wireless communication apparatus 200 receives a signal, the second group of ports may be used for input, and the first group of ports may be used for output.

For example, when the combiner 221 has a plurality of ports used for input and one port used for output, the combiner 221 may combine signals input by the plurality of ports, to obtain one signal, and output the signal from the port used for output.

For example, when the combiner 221 has a plurality of ports used for output and one port used for input, the combiner 221 may separately output, from the plurality of ports used for output, signals received from the one port used for input.

For example, the combiner 221 includes but is not limited to one of the following: a frequency synthesizer (for example, Diplexer (a duplexer), Triplexer (a triplexer), and Extractor (an extractor)) and a switch with a Multi-On (multi-on) function.

For example, the first switch 222 may include a data port (for example, a port p1, a port p2, and a port p3 in FIG. 2) and a control port (not shown in FIG. 2). The data port may include a plurality of bidirectional ports, and may be configured to input and output an interaction signal between the wireless communication apparatus 200 and another apparatus. The control port may be configured to input a control signal for the first switch 222, and the control signal may be used to control a status of the first switch 222.

For example, the data port of the first switch 222 may include two groups: a third group of ports and a fourth group of ports. When the third group of ports is used for input, the fourth group of ports is used for output. When the fourth group of ports is used for input, the third group of ports is used for output. For example, when the wireless communication apparatus 200 transmits a signal, the third group of ports may be used for input, and the fourth group of ports may be used for output. When the antenna of the wireless communication apparatus 200 receives a signal, the fourth group of ports may be used for input, and the third group of ports may be used for output.

For example, the third group of ports may include a plurality of data ports, and the fourth group of ports may also include a plurality of data ports. A quantity of data ports included in the third group of ports may be the same as or different from a quantity of data ports included in the fourth group of ports. This may be specifically determined based on an actual requirement. This is not limited in this embodiment of this application. For example, in FIG. 2, the third group of ports may include one data port like the port p1, and the fourth group of ports may include two data ports such as the port p2 and the port p3. Each data port included in the third group of ports may be connected to each data port included in the fourth group of ports. The status of the first switch 222 may be a state in which the data ports in the third group of ports are connected to the data ports in the fourth group of ports. The first switch 222 may have a plurality of states, and at least one data port is different in two pairs of ports that are connected corresponding to two different states. For example, the first switch 222 in FIG. 2 may include two states. A first state may be: A data port coupled to the combiner 221 in the third group of ports and a port coupled to the first antenna 231 in the fourth group of ports are connected, that is, the port p1 and the port p2 are connected. A second state may be: A data port coupled to the combiner 221 in the third group of ports and a port coupled to the second antenna 232 in the fourth group of ports are connected, that is, the port p1 and the port p3 are connected.

For example, the second switch 223 may include a data port (for example, a port p4, a port p5, a port p6, a port p7, and a port p8 in FIG. 2) and a control port (not shown in FIG. 2). For example, the data port of the second switch 223 may include two groups: a fifth group of ports (for example, including the port p4) and a sixth group of ports (for example, including the ports p5, p6, p7, and p8). When the fifth group of ports is used for input, the sixth group of ports is used for output. When the sixth group of ports is used for input, the fifth group of ports is used for output. For descriptions of the second switch 223, refer to the foregoing descriptions of the first switch 222. Details are not described herein again.

For example, in the wireless communication apparatus 200, four antennas may be allocated for communication of a first network, and two antennas are allocated for communication of a second network, where one antenna is multiplexed during communication of the first network and communication of the second network.

For example, the first antenna 231 and the second antenna 232 may be allocated for communication of the second network, and the first antenna 231, the third antenna 233, the fourth antenna 234, and the fifth antenna 235 may be allocated for communication of the first network. In other words, the first antenna 231 is multiplexed during communication of the first network and communication of the second network. Certainly, the first antenna 231 and the second antenna 232 may alternatively be allocated for communication of the second network, and the second antenna 232, the third antenna 233, the fourth antenna 234, and the fifth antenna 235 may be allocated for communication of the first network. In other words, the second antenna 232 is multiplexed during communication of the first network and communication of the second network. This is not limited in this embodiment of this application.

For example, the first network and the second network are two networks using different mobile communication technologies. For example, the first network is a 5G network, and the second network is a 4G network. Frequency bands corresponding to the first network and the second network may be different. For example, when the first network is a 5G network, a corresponding frequency band may be, for example, 2515 MHz to 2675 MHz (a corresponding frequency band number is n41), and when the second network is a 4G network, a corresponding frequency band may be, for example, 1710 MHz to 2690 MHz (which correspondingly may be MHB (MB (Medium Frequency, mediate frequency) & HB (High Frequency, high frequency), medium-high frequency), where a corresponding frequency band number may include B3 and B39). The first network and the second network may multiplex the first antenna 231 or the second antenna 232 in a frequency division manner.

For example, the processing circuit 210 may be coupled to the combiner 221, the second antenna 232, the third antenna 233, the fourth antenna 234, and the fifth antenna 235. The combiner 221 is coupled to the first antenna 231.

For example, if the first antenna 231 is multiplexed during communication of the first network and communication of the second network, the processing circuit 210 may be configured to transmit a first signal from the third antenna 233, the fourth antenna 234, and the fifth antenna 235 in turn, send the first signal and a second signal to the combiner, and transmit the first signal and the second signal from the first antenna 231 by using the combiner 221. The first signal is an SRS of the first network, and the second signal is a signal of the second network.

For example, if the second antenna 232 is multiplexed during communication of the first network and communication of the second network, the processing circuit 210 may be configured to transmit a first signal from the third antenna 233, the fourth antenna 234, and the fifth antenna 235 in turn, send the first signal and a second signal to the combiner, and transmit the first signal and the second signal from the second antenna 232 by using the combiner 221. When transmitting the second signal and the first signal in turn, the processing circuit 210 may determine whether performance of the first antenna 231 is better than performance of the second antenna 232. If the performance of the first antenna 231 is better than the performance of the second antenna 232, the first signal and the second signal are transmitted from the first antenna 231 by using the combiner 221. If the performance of the second antenna 232 is better than the performance of the first antenna 231, the first signal and the second signal are transmitted from the second antenna 232 by using the combiner 221.

For example, the processing circuit 210 may be coupled to the first switch 222, the second switch 223, and the combiner 221. Different ports of the processing circuit 210 may be separately coupled to the combiner 221, the first switch 222, and the second switch 223. The second switch 223 may be coupled to the third antenna 233, the fourth antenna 234, the fifth antenna 235, and the combiner 221. Different ports of the second switch 223 may be separately coupled to the third antenna 233, the fourth antenna 234, the fifth antenna 235, and the combiner 221. The combiner 221 may be coupled to the first switch 222. The first switch 222 may be coupled to the first antenna 231 and the second antenna 232, where different ports of the first switch 222 may be separately coupled to the first antenna 231 and the second antenna 232.

For example, the different ports of the processing circuit 210 may be separately coupled to the first group of ports of the combiner 221, the control port of the first switch 222, and the control port and the data port of the second switch 223. For example, a port of the processing circuit 210 may be coupled to, for example, the port p4 in the fifth group of ports of the second switch 223.

For example, a port in the second group of ports of the combiner 221 may be coupled to a port like the port p1 in the third group of ports of the first switch 222.

For example, two data ports such as the port p2 and the port p3 in the fourth group of ports of the first switch 222 may be respectively coupled to the first antenna 231 and the second antenna 232.

For example, four data ports such as the ports p5, p6, p7, and p8 in the sixth group of ports of the second switch 223 may be respectively coupled to the third antenna 233, the fourth antenna 234, the fifth antenna 235, and a port in the first group of ports of the combiner 221.

For example, if the first antenna 231 is multiplexed during communication of the first network and communication of the second network, the processing circuit 210 may be configured to: control a status of the second switch 223 and transmit the first signal by using the third antenna 233, the fourth antenna 234, and the fifth antenna 235 in turn; and control a status of the second switch 223, send the first signal to the combiner 221, send the second signal to the combiner 221, control a status of the first switch 222, and transmit the first signal and the second signal from the first antenna 231 by sequentially using the combiner 221 and the first switch 222.

For example, if the second antenna 232 is multiplexed during communication of the first network and communication of the second network, the processing circuit 210 may be configured to: control a status of the second switch 223 and transmit the first signal by using the third antenna 233, the fourth antenna 234, and the fifth antenna 235 in turn; and control a status of the second switch 223, send the first signal to the combiner 221, send the second signal to the combiner 221, control a status of the first switch 222, and transmit the first signal and the second signal from the second antenna 232 by sequentially using the combiner 221 and the first switch 222. When transmitting the second signal and the first signal in turn, the processing circuit 210 may determine whether performance of the first antenna 231 is better than performance of the second antenna 232. If the performance of the first antenna 231 is better than the performance of the second antenna 232, the processing circuit 210 may be configured to control the status of the first switch 222 and the status of the second switch 223, and transmit the first signal and the second signal from the first antenna 231 by sequentially using the second switch 223, the combiner 221, and the first switch 222. If the performance of the second antenna 232 is better than the performance of the first antenna 231, the processing circuit 210 may be configured to control the status of the first switch 222 and the status of the second switch 223, and transmit the first signal and the second signal from the second antenna 232 by sequentially using the second switch 223, the combiner 221, and the first switch 222.

For ease of understanding by a person skilled in the art, the following provides descriptions by using an example in which the first signal and the second signal are transmitted from the first antenna 231.

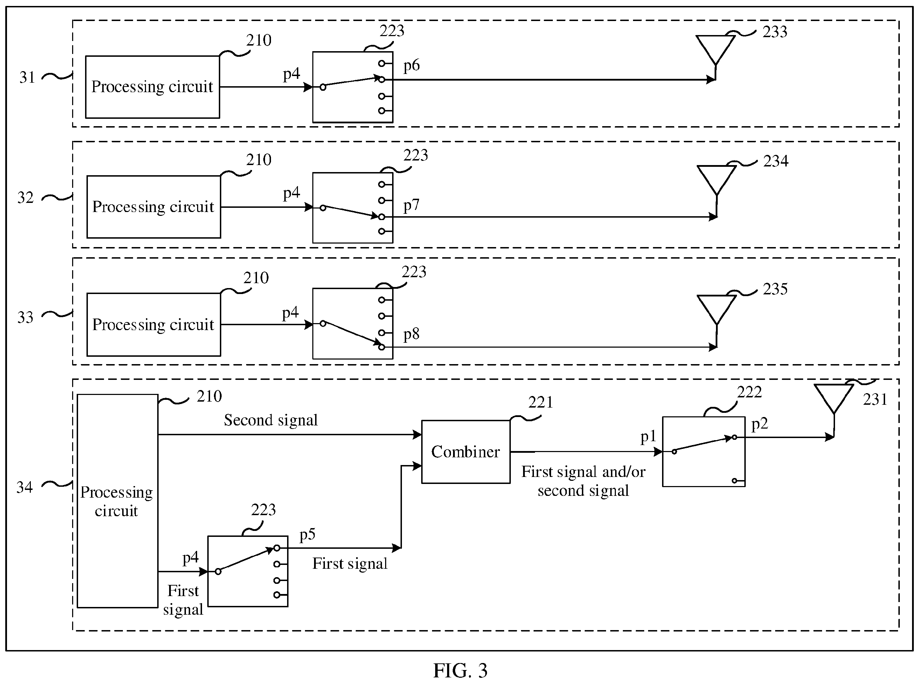

FIG. 3 is a schematic diagram of an example of switch statuses corresponding to a case in which a wireless communication apparatus transmits an SRS by using four paths in turn according to this embodiment of this application. For example, the wireless communication apparatus 200 may transmit an SRS in turn by using the following four paths:
a path 31: the processing circuit 210->the second switch 223->the third antenna 233;
a path 32: the processing circuit 210->the second switch 223->the fourth antenna 234;
a path 33: the processing circuit 210->the second switch 223->the fifth antenna 235; and
a path 34: the processing circuit 210->the second switch 223->the combiner 221->the first switch 222->the first antenna 231.

For example, the first signal may be transmitted from the third antenna 233 by using the path 31. Refer to 31 in FIG. 3. The processing circuit 210 may send the first signal to the second switch 223, and may send a first control signal to the second switch 223, so that the second switch 223 connects, based on the first control signal, the port p6 that is coupled to the third antenna 233 and that is of the second switch 223 and the port p4 that is coupled to the processing circuit 210 and that is of the second switch 223. In this way, the first signal received from the processing circuit 210 may be transmitted from the third antenna 233 by using the second switch 223.

For example, the first signal may be transmitted from the fourth antenna 234 by using the path 32 Refer to 32 in FIG. 3. The processing circuit 210 sends the first signal to the second switch 223, and may send a second control signal to the second switch 223, so that the second switch 223 connects, based on the second control signal, the port p7 that is coupled to the fourth antenna 234 and that is of the second switch 223 and the port p4 that is coupled to the processing circuit 210 and that is of the second switch 223. In this way, the first signal received from the processing circuit 210 may be transmitted from the fourth antenna 234 by using the second switch 223.

For example, the first signal may be transmitted from the fifth antenna 235 by using the path 33 Refer to 33 in FIG. 3. The processing circuit 210 sends the first signal to the second switch 223, and may send a third control signal to the second switch 223, so that the second switch 223 connects, based on the third control signal, the port p8 that is coupled to the fifth antenna 235 and that is of the second switch 223 and the port p4 that is coupled to the processing circuit 210 and that is of the second switch 223. In this way, the first signal received from the processing circuit 210 may be transmitted from the fifth antenna 235 by using the second switch 223.

For example, the first signal may be transmitted from the first antenna 231 by using the path 34. Refer to 34 in FIG. 3. The processing circuit 210 sends the first signal to the second switch 223. A fourth control signal may be sent to the second switch 223, so that the second switch 223 connects, based on the control signal, the port p5 that is coupled to the combiner 221 and that is of the second switch 223 and the port p4 that is coupled to the processing circuit 210 and that is of the second switch 223. A fifth control signal may be sent to the first switch 222, so that the first switch 222 connects, based on the fifth control signal, the port p2 that is coupled to the first antenna 231 and that is of the first switch 222 and the input port p1 that is coupled to the combiner 221 and that is of the first switch 222. In this way, the first signal can be sent to the combiner 221 by using the second switch 223, the combiner 221 sends the first signal to the first switch 222, and then the first signal may be transmitted from the first antenna 231 by using the first switch 222.

For example, an occasion at which the processing circuit 210 sends a control signal to the second switch 223 may be set based on a requirement. This is not limited in this embodiment of this application. This occasion may be any time from a time point at which the processing circuit 210 obtains the first signal to a time point at which the first signal is sent to the second switch 223.

For example, an occasion at which the processing circuit 210 sends a control signal to the first switch 222 may be set based on a requirement. This is not limited in this embodiment of this application. This occasion may be any time from a time point at which the processing circuit 210 obtains the first signal to a time point at which the first signal is sent to the first switch 222.

It should be noted that a sequence in which the wireless communication apparatus transmits the first signal in turn is not limited in this embodiment of this application, and may be set based on a requirement. This is not limited in this embodiment of this application. For example, an SRS may be transmitted in turn according to a sequence of the first antenna 231, the third antenna 233, the fourth antenna 234, and the fifth antenna 235, that is, the SRS is transmitted in turn by sequentially using the path 34, the path 31, the path 32, and the path 33. For another example, an SRS is transmitted in turn according to a sequence of the third antenna 233, the fourth antenna 234, the fifth antenna 235, and the first antenna 231, that is, the SRS is transmitted in turn by sequentially using the path 31, the path 32, the path 33, and the path 34.

When the wireless communication apparatus sends a signal (which may be referred to as a second signal for ease of subsequent description) of the second network, the second signal may be transmitted from the first antenna 231 by using the processing circuit 210->the combiner 221->the first switch 222->the first antenna 231.

For example, the processing circuit 210 may send the second signal to the combiner 221, control the status of the first switch 222, and transmit the second signal from the first antenna 231. For example, refer to 34 in FIG. 3. The processing circuit 210 may send the second signal to the combiner 221, and send a sixth control signal to the first switch 222, so that the first switch 222 connects, based on the sixth control signal, the port p2 that is coupled to the first antenna 231 and that is of the first switch 222 and the port p1 that is coupled to the combiner 221 and that is of the first switch 222. Then the combiner 221 may send the second signal to the first switch 222, so that the second signal may be transmitted from the first antenna 231 by using the first switch 222.

For example, when the wireless communication apparatus is about to send the first signal to the first antenna 231 in turn, if the wireless communication apparatus is transmitting the second signal, for a process in which the wireless communication apparatus sends the first signal and the second signal, refer to 34 in FIG. 3. When the wireless communication apparatus is about to send the first signal to the first antenna 231 in turn, if the wireless communication apparatus is transmitting the second signal, the combiner 221 may receive, by using a port coupled to the second switch 223, the first signal sent by the processing circuit 210, and receive, by using a port coupled to the processing circuit 210, the second signal sent by the processing circuit 210. Then, the combiner 221 may combine the first signal and the second signal to obtain a combined signal, and input the combined signal to the first switch 222. After the first switch 222 connects, based on the fifth control signal sent by the processing circuit 210, the port p2 that is coupled to the first antenna 231 and that is of the first switch 222 and the port p1 that is coupled to the combiner 221 and that is of the first switch 222, the combined signal may be transmitted from the first antenna 231 by using the first switch 222. In this way, both the first signal and the second signal are transmitted from the first antenna 231. In this way, the SRS of the first network is transmitted from four paths in turn, thereby increasing a downlink peak rate without interrupting a service of the second network, and improving user experience.

For example, when the wireless communication apparatus is about to send the first signal to the first antenna 231 in turn, if the wireless communication apparatus does not send a signal of the second network, the combiner 221 may directly send the first signal received from the second switch 223 to the first switch 222, and transmit the first signal from the first antenna 231. For example, the first signal may be transmitted from the first antenna 231 according to 34 in FIG. 3.

Compared with the 4-antenna wireless communication apparatus that transmits an SRS by using two paths in turn in the conventional technology, a 5-antenna wireless communication apparatus in embodiments of this application can transmit an SRS by using four paths in turn. Therefore, a downlink peak rate is increased.

In addition, terminal devices of different levels (for example, prices) have different SRS in-turn transmission rules. A terminal device of a higher level has a higher requirement on a rule of transmitting an SRS in turn (that is, a larger quantity of antennas for transmitting an SRS in turn) by a wireless communication apparatus in the terminal device. The 4-antenna terminal device in the conventional technology cannot meet the requirement of the terminal device of a higher level, but a terminal device using the wireless communication apparatus according to embodiments of this application can meet the requirement.

Compared with the 6-antenna wireless communication apparatus that transmits an SRS by using four paths in turn in the conventional technology, the 5-antenna wireless communication apparatus in embodiments of this application transmits an SRS by using four paths in turn. Due to a limitation on space of the terminal device, space occupied by one added antenna in embodiments of this application is larger than space occupied by each of the two antennas added to the 6-antenna terminal device in the conventional technology. Therefore, performance of the antenna is better, and a mobile data service can be ensured.

An application scenario in embodiments of this application may be as follows: The first network is a 5G network, the second network is a 4G network, the first signal is a 5G SRS, and the second signal is a 4G signal. The first antenna 231 and the second antenna 232 are used for 4G communication, the first antenna 231, the third antenna 233, the fourth antenna 234, and the fifth antenna 235 may be used for 5G communication, and the first antenna 231 is an antenna multiplexed during 4G communication and 5G communication. Refer to FIG. 3 again. A process in which the wireless communication apparatus transmits a 5G SRS in turn may be as follows: The processing circuit 210 may send the 5G SRS to the second switch 223, control the port p4 of the second switch 223 to be sequentially connected to the port p6, the port p7, and the port p8, and then transmit the 5G SRS from the third antenna 233, the fourth antenna 234, and the fifth antenna 235 in turn. In addition, the port p4 of the second switch 223 is controlled to be connected to the port p5, and the 5G SRS is sent to the combiner 221. In this case, if the wireless communication apparatus is sending the 4G signal, the combiner 221 may receive the 4G signal and the 5G SRS. Then, the combiner 221 may combine the 4G signal and the 5G SRS to obtain a combined signal, and input the combined signal to the first switch 222. Then, the processing circuit 210 may control the ports p1 and p2 of the first switch 222 to be connected, and transmit the combined signal by using the first antenna 231. In this way, both the 4G signal and the 5G SRS can be transmitted. Therefore, the 5G SRS is transmitted by using four paths in turn. This increases the downlink peak rate of 5G and does not interrupt a 4G service.

For example, the first antenna 231 may be a main antenna, the second antenna 232 may be a diversity antenna, and the third antenna 233 and the fourth antenna 234 may be MIMO (multiple-in multiple-out, multiple-in multiple-out) antennas.

For example, the wireless communication apparatus may transmit the signal of the second network from the first antenna 231, or may transmit the signal of the second network from the second antenna 232. This is specifically determined based on performance of the first antenna 231 and performance of the second antenna 232. This is not limited in embodiments of this application. If the performance of the second antenna 232 is better than the performance of the first antenna 231, the signal of the second network may be transmitted from the second antenna 232. If the performance of the first antenna 231 is better than the performance of the second antenna 232, the signal of the second network may be transmitted from the first antenna 231. In addition, the signal of the second network may be received from the first antenna 231 and the second antenna 232.

For example, the wireless communication apparatus may transmit another signal of the first network from the third antenna 233, or may transmit another signal of the first network from the fourth antenna 234. This is specifically determined based on performance of the third antenna 233 and performance of the fourth antenna 234. This is not limited in embodiments of this application. If the performance of the third antenna 233 is better than the performance of the fourth antenna 234, the another signal of the first network may be transmitted from the third antenna 233. If the performance of the fourth antenna 234 is better than the performance of the third antenna 233, the another signal of the first network may be transmitted from the fourth antenna 234. In addition, the another signal of the first network may be received from the first antenna 231, the third antenna 233, the fourth antenna 234, and the fifth antenna 235. The another signal of the first network may include a signal other than the SRS of the first network.

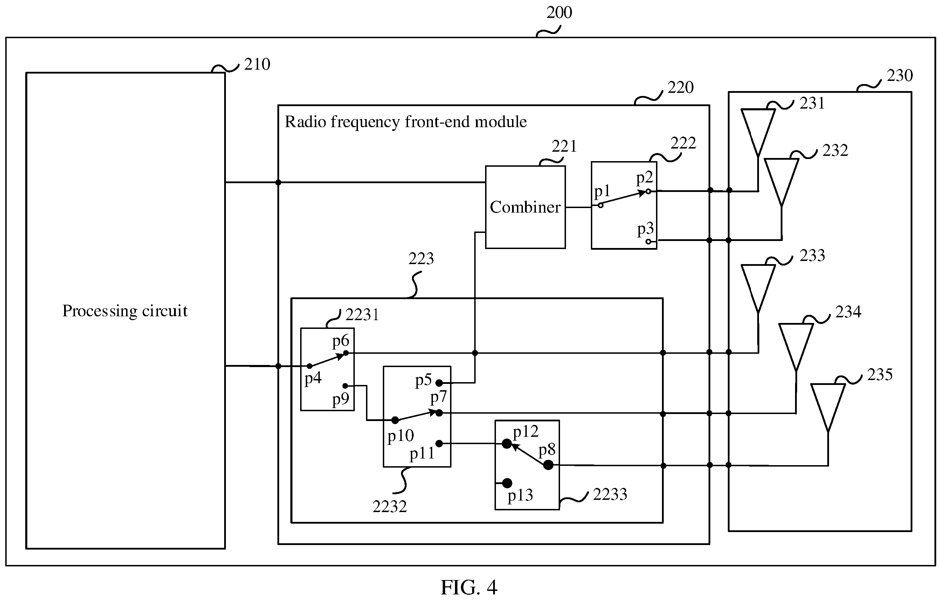

FIG. 4 is a schematic diagram of an example of a structure of another wireless communication apparatus according to an embodiment of this application. A wireless communication apparatus 200 shown in FIG. 4 is only an example of the wireless communication apparatus, and the wireless communication apparatus 200 may have more or fewer components than those shown in the figure, may combine two or more components, or may have different component configurations. Various components shown in FIG. 4 may be implemented in hardware including one or more signal processing and/or application-specific integrated circuits, software, or a combination of hardware and software.

The wireless communication apparatus 200 may include a processing circuit 210, a radio frequency front-end module 220, and an antenna group 230.

For example, the processing circuit 210 may be coupled to the radio frequency frontend module 220, and the radio frequency front-end module 220 may be coupled to the antenna group 230.

For example, the antenna group 230 may include a first antenna 231, a second antenna 232, a third antenna 233, a fourth antenna 234, and a fifth antenna 235.

For example, the radio frequency front-end module 220 may include a combiner 221, a first switch 222, and a second switch 223.

For example, the processing circuit 210 may be coupled to the second switch 223, the first switch 222, and the combiner 221. The second switch 223 may be coupled to the third antenna 233, the fourth antenna 234, the fifth antenna 235, and the combiner 221. The combiner 221 may be coupled to the first switch 222, and the first switch 222 may be coupled to the first antenna 231 and the second antenna 232.

For example, the first switch 222 may be an antenna switching switch, and may be referred to as a first antenna switching switch. The second switch 223 may include a second antenna switching switch 2231, an SRS switch 2232, and a transceiver switch 2233. The second antenna switching switch 2231 is coupled to the third antenna 233 and the SRS switch 2232, the SRS switch 2232 is coupled to the fourth antenna 234, the transceiver switch 2233, and the combiner 221, and the transceiver switch 2233 is coupled to the fifth antenna 235. Different ports of the SRS switch 2232 may be separately coupled to the fourth antenna 234, the transceiver switch 2233, and the combiner 221.

For example, the second antenna switching switch 2231 may include a data port (for example, ports p4, p6, and p9 in FIG. 4) and a control port (not shown in FIG. 4). The data port of the second antenna switching switch 2231 may include two groups: a seventh group of ports (for example, including the port p4) and an eighth group of ports (for example, including the ports p6 and p9). When the seventh group of ports is used for input, the eighth group of ports is used for output. When the eighth group of ports is used for input, the seventh group of ports is used for output. For description of the second antenna switching switch 2231, refer to the foregoing descriptions of the first switch 222. Details are not described herein again.

For example, the SRS switch 2232 may include a data port (for example, ports p5, p7, p10, and p11 in FIG. 4) and a control port (not shown in FIG. 4). The data port may include a plurality of bidirectional ports, and may be configured to input and output an interaction signal between the wireless communication apparatus 200 and another apparatus. The control port may be configured to input a control signal for the SRS switch 2232, and the control signal may be used to control a status of the SRS switch 2232.

For example, the data port of the SRS switch 2232 may include two groups: a ninth group of ports and a tenth group of ports. When the ninth group of ports is used for input, the tenth group of ports is used for output. When the tenth group of ports is used for input, the ninth group of ports is used for output. For example, when the wireless communication apparatus 200 transmits a signal, the ninth group of ports may be used for input, and the tenth group of ports may be used for output. When the antenna of the wireless communication apparatus 200 receives a signal, the tenth group of ports may be used for input, and the ninth group of ports may be used for output.

For example, the ninth group of ports may include a plurality of data ports, and the tenth group of ports may also include a plurality of data ports. A quantity of data ports included in the ninth group of ports may be the same as or different from a quantity of data ports included in the tenth group of ports. This may be specifically determined based on an actual requirement. This is not limited in this embodiment of this application. For example, in FIG. 4, the ninth group of ports may include one data port like the port p10, and the tenth group of ports may include three data ports such as the ports p5, p7, and p11. Each data port included in the ninth group of ports may be connected to each data port included in the tenth group of ports. A status of the SRS switch 2232 may be a state in which the data ports in the ninth group of ports are connected to the data ports in the tenth group of ports. The SRS switch 2232 may have a plurality of states, and at least one data port is different in two pairs of ports that are connected corresponding to two different states. For example, the SRS switch 2232 in FIG. 4 may include three states. A first state may be: A data port coupled to the second antenna switching switch 2231 in the ninth group of ports and a port coupled to the fourth antenna 234 in the eighteenth group of ports are connected, that is, the port p10 and the port p7 are connected. A second state may be: A data port that is in the ninth group of ports and that is switched to and coupled to the second antenna 232 and a port coupled to the transceiver switch 2233 in the tenth group of ports are connected, that is, the port p10 and the port p11 are connected. A third state may be: A data port coupled to the second antenna switching switch 2231 in the ninth group of ports and a port coupled to the combiner 221 in the tenth group of ports are connected, that is, the port p10 and the port p5 are connected.

For example, the transceiver switch 2233 may include a data port (for example, ports p8, p12, and p13 in FIG. 4) and a control port (not shown in FIG. 4). The data port may be configured to input and/or output an interaction signal between the wireless communication apparatus 200 and another apparatus. The control port may be configured to input a control signal for the transceiver switch 2233, and the control signal may be used to control a status of the transceiver switch 2233.

For example, the transceiver switch 2233 includes a data port like the port p8 coupled to the fifth antenna 235, and may be a bidirectional port. Therefore, when the wireless communication apparatus 200 transmits a signal, the port may be used for output. When the antenna of the wireless communication apparatus 200 receives a signal, the port may be used for input. The transceiver switch 2233 further includes a data port like the port p12 coupled to the SRS switch 2232. The data port may be a unidirectional port or a bidirectional port, and is configured to receive a signal sent by the SRS switch 2232. In addition, the transceiver switch 2233 may further include a data port like the port p13 coupled to the processing circuit 210. The data port may be a unidirectional port or a bidirectional port, and is configured to send a signal to the processing circuit 210 (not shown in FIG. 4).

For example, the processing circuit 210 may be coupled to the second antenna switching switch 2231. The processing circuit 210 may be coupled to, for example, the port p4 in the seventh group of ports of the second antenna switching switch 2231, and may be coupled to the control port of the second antenna switching switch 2231.

For example, the processing circuit 210 may be coupled to the SRS switch 2232. The processing circuit 210 may be coupled to the control port of the SRS switch 2232.

For example, the processing circuit 210 may be coupled to the transceiver switch 2233. The processing circuit 210 may be coupled to the control port of the transceiver switch 2233.

For example, two ports such as the ports p6 and p9 in the sixth group of ports of the second antenna switching switch 2231 may be separately coupled to the third antenna 233 and a port like the port p10 in the seventh group of ports of the SRS switch 2232. Three ports such as the ports p7, p11, and p5 in the eighth group of ports of the SRS switch 2232 may be separately coupled to the fourth antenna 234, the port p12 of the transceiver switch 2233, and a port in the first group of ports of the combiner 221.

For example, four transmit paths corresponding to four paths for transmitting an SRS in turn may be respectively:
the processing circuit 210->the second antenna switching switch 2231->the third antenna 233;
the processing circuit 210->the second antenna switching switch 2231->the SRS switch 2232->the fourth antenna 234;
the processing circuit 210->the second antenna switching switch 2231->the SRS switch 2232->the transceiver switch 2233->the fifth antenna 235; and
the processing circuit 210->the second antenna switching switch 2231->the SRS switch 2232->the combiner 221->the first switch 222->the first antenna 231.

For example, the first signal may be transmitted from the third antenna 233 by using the path: the processing circuit 210->the second antenna switching switch 2231->the third antenna 233. A process may be as follows: The processing circuit 210 may send the first signal to the second antenna switching switch 2231, and may send a first antenna switching control signal to the second antenna switching switch 2231, so that the second antenna switching switch 2231 connects, based on the first antenna switching control signal, the port p6 that is coupled to the third antenna 233 and that is of the second antenna switching switch 2231 and the port p4 that is coupled to the processing circuit 210 and that is of the second antenna switching switch 2231. In this way, the first signal received from the processing circuit 210 may be transmitted from the third antenna 233 by using the second antenna switching switch 2231.

For example, the first signal may be transmitted from the fourth antenna 234 by using the path: the processing circuit 210->the second antenna switching switch 2231->the SRS switch 2232->the fourth antenna 234. A process may be as follows: The processing circuit 210 sends the first signal to the second antenna switching switch 2231. A second antenna switching control signal may be sent to the second antenna switching switch 2231, so that the second antenna switching switch 2231 connects, based on the second antenna switching control signal, the port p9 that is coupled to the SRS switch 2232 and that is of the second antenna switching switch 2231 and the port p4 that is coupled to the processing circuit 210 and that is of the second antenna switching switch 2231. A first SRS status control signal may be sent to the SRS switch 2232, so that the SRS switch 2232 connects, based on the first SRS status control signal, the port p7 that is coupled to the fourth antenna 234 and that is of the SRS switch 2232 and the port p10 that is coupled to the second antenna switching switch 2231 and that is of the SRS switch 2232. In this way, the first signal may be sent to the SRS switch 2232 by using the second antenna switching switch 2231, and the first signal may be transmitted from the fourth antenna 234 by using the SRS switch 2232.

For example, the first signal may be transmitted from the fifth antenna 235 by using the path: the processing circuit 210->the second antenna switching switch 2231->the SRS switch 2232->the transceiver switch 2233->the fifth antenna 235. A process may be as follows: The processing circuit 210 sends the first signal to the second antenna switching switch 2231. A third antenna switching control signal may be sent to the second antenna switching switch 2231, so that the second antenna switching switch 2231 connects, based on the third antenna switching control signal, the port p9 that is coupled to the SRS switch 2232 and that is of the second antenna switching switch 2231 and the port p4 that is coupled to the processing circuit 210 and that is of the second antenna switching switch 2231. A second SRS status control signal may be sent to the SRS switch 2232, so that the SRS switch 2232 connects, based on the second SRS status control signal, the port p11 that is coupled to the transceiver switch 2233 and that is of the SRS switch 2232 and the port p10 that is coupled to the second antenna switching switch 2231 and that is of the SRS switch 2232. A first transmit/receive state control signal is sent to the transceiver switch 2233, so that the transceiver switch 2233 connects, based on the first transmit/receive state control signal, the port p12 that is coupled to the SRS switch 2232 and that is of the transceiver switch 2233 and the port p8 that is coupled to the fifth antenna 235 and that is of the transceiver switch 2233. In this way, the first signal may be sent to the SRS switch 2232 by using the second antenna switching switch 2231, the first signal may be sent to the transceiver switch 2233 by using the SRS switch 2232, and the first signal may be transmitted from the fifth antenna 235 by using the transceiver switch 2233.

For example, the first signal may be transmitted from the first antenna 231 by using the path: the processing circuit 210->the second antenna switching switch 2231->the SRS switch 2232->the combiner 221->the first antenna switching switch->the first antenna 231. A process may be as follows: The processing circuit 210 sends the first signal to the second antenna switching switch 2231. A fourth antenna switching control signal may be sent to the second antenna switching switch 2231, so that the second antenna switching switch 2231 connects, based on the fourth antenna switching control signal, the port p9 that is coupled to the SRS switch 2232 and that is of the second antenna switching switch 2231 and the port p4 that is coupled to the processing circuit 210 and that is of the second antenna switching switch 2231. A third SRS status control signal may be sent to the SRS switch 2232, so that the SRS switch 2232 connects, based on the third SRS status control signal, the port p5 that is coupled to the combiner 221 and that is of the SRS switch 2232 and the port p10 that is coupled to the second antenna switching switch 2231 and that is of the SRS switch 2232. A fifth antenna switching control signal may be sent to the first antenna switching switch, so that the first antenna switching switch connects, based on the fifth antenna switching control signal, the port p2 that is coupled to the first antenna 231 and that is of the first antenna switching switch and the port p1 that is coupled to the combiner 221 and that is of the first antenna switching switch. In this way, the first signal may be sent to the SRS switch 2232 by using the second antenna switching switch 2231, and then the first signal is sent to the combiner 221 by using the SRS switch 2232. Next, the combiner 221 sends the first signal to the first antenna switching switch, and then the first signal may be transmitted from the first antenna 231 by using the first antenna switching switch.

For example, an occasion at which the processing circuit 210 sends a control signal to the second antenna switching switch 2231 may be set based on a requirement. This is not limited in this embodiment of this application. This occasion may be any time from a time point at which the processing circuit 210 obtains the first signal to a time point at which the first signal is sent to the second antenna switching switch 2231.

For example, an occasion at which the processing circuit 210 sends a control signal to the first switch 222 may be set based on a requirement. This is not limited in this embodiment of this application. This occasion may be any time from a time point at which the processing circuit 210 obtains the first signal to a time point at which the first signal is sent to the first switch 222.

For example, an occasion at which the processing circuit 210 sends a control signal to the SRS switch 2232 may be set based on a requirement. This is not limited in this embodiment of this application. This occasion may be any time from a time point at which the processing circuit 210 obtains the first signal to a time point at which the first signal is sent to the SRS switch 2232.

For example, an occasion at which the processing circuit 210 sends a control signal to the transceiver switch 2233 may be set based on a requirement. This is not limited in this embodiment of this application. This occasion may be any time from a time point at which the processing circuit 210 obtains the first signal to a time point at which the first signal is sent to the transceiver switch 2233.

It should be noted that a sequence in which the wireless communication apparatus 200 transmits the first signal in turn is not limited in this embodiment of this application, and may be set based on a requirement. This is not limited in this embodiment of this application. For example, the first signal may be transmitted in turn according to a sequence of the first antenna 231, the third antenna 233, the fourth antenna 234, and the fifth antenna 235. For another example, the first signal may be transmitted in turn according to a sequence of the third antenna 233, the fourth antenna 234, the fifth antenna 235, and the first antenna 231.

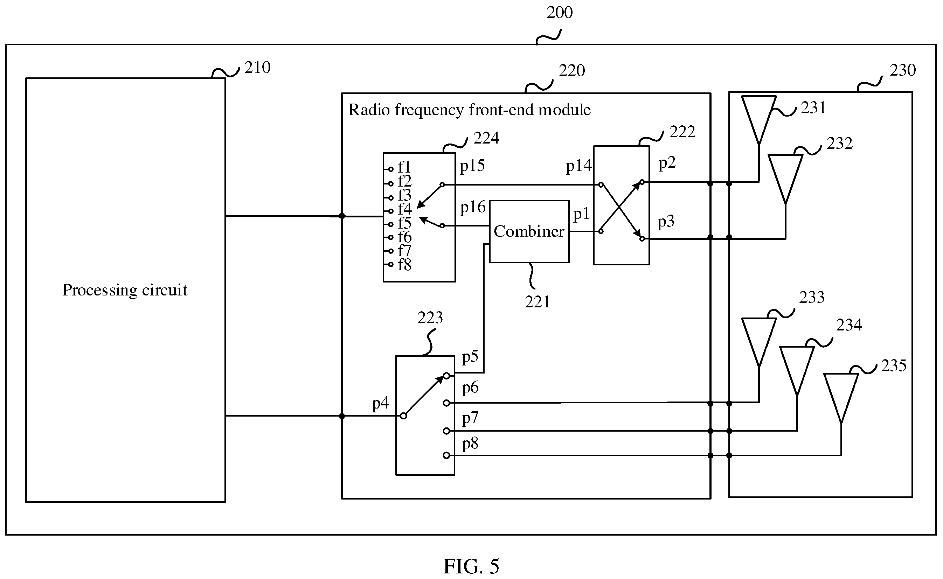

FIG. 5 is a schematic diagram of an example of a structure of a still another wireless communication apparatus according to an embodiment of this application. A wireless communication apparatus 200 shown in FIG. 5 is only an example of the wireless communication apparatus, and the wireless communication apparatus may have more or fewer components than those shown in the figure, may combine two or more components, or may have different component configurations. Various components shown in FIG. 5 may be implemented in hardware including one or more signal processing and/or application-specific integrated circuits, software, or a combination of hardware and software.

The wireless communication apparatus 200 may include a processing circuit 210, a radio frequency front-end module 220, and an antenna group 230.

For example, the processing circuit 210 may be coupled to the radio frequency frontend module 220, and the radio frequency front-end module 220 may be coupled to the antenna group 230.

For example, the antenna group 230 may include a first antenna 231, a second antenna 232, a third antenna 233, a fourth antenna 234, and a fifth antenna 235.

For example, the radio frequency front-end module 220 may include a combiner 221, a first switch 222, a second switch 223, and a third switch 224.

For example, the processing circuit 210 may be coupled to the second switch 223, the first switch 222, and the third switch 224. The second switch 223 may be coupled to the third antenna 233, the fourth antenna 234, the fifth antenna 235, and the combiner 221, and the third switch 224 may be coupled to the combiner 221 and the first switch 222. The combiner 221 may be coupled to the first switch 222, and the first switch 222 may be coupled to the first antenna 231 and the second antenna 232.

For example, the third switch 224 may be configured to select a signal frequency band, and may be further configured to select a signal transmission channel. For example, if the wireless communication apparatus 200 transmits a second signal, a corresponding transmit channel may include: a channel 51: the third switch 224->the combiner 221->the first switch 222->the first antenna 231; and a channel 52: the third switch 224->the first switch 222->the first antenna 231.

For example, the third switch 224 may include a data port (for example, ports p15 and p16 in FIG. 5), a control port (not shown in FIG. 5), and a frequency band port (for example, f1, f2, f3 (for example, 1710 MHz to 1785 MHz), f4 (for example, 1800 MHz to 1920 MHz), f5, f6, f7, and f8 in FIG. 5). The data port may be a bidirectional port, and may be configured to input and output an interaction signal between the wireless communication apparatus 200 and another apparatus. For example, when the wireless communication apparatus 200 transmits a signal, the ports p15 and p16 may be used for output. When an antenna of the wireless communication apparatus 200 receives a signal, the ports p15 and p16 may be used for input. The data port is connected to the frequency band port, so that a frequency band can be selected. When different data ports are connected to the frequency band port, a signal communication channel can be selected. The control port may be configured to input a control signal, and the control signal may be used to control a status of the third switch 224. The status of the third switch 224 may include: a state in which the frequency band port is connected to the data port, and at least one data port is different in two pairs of ports that are connected corresponding to two different states. For example, the third switch 224 in FIG. 5 may include 16 states. A first state may be that the port p15 is connected to the port f1, a second state may be that the port p15 is connected to the port f2, ..., and an eighth state may be that the port p15 is connected to the port f8. A ninth state may be that the port p16 is connected to the port f1, a tenth state may be that the port p16 is connected to the port f2, ..., and a sixteenth state may be that the port p16 is connected to the port f8.

For example, when the wireless communication apparatus 200 is in a scenario in which a first network and a second network can be detected, for example, an EN-DC scenario, the wireless communication apparatus 200 may perform both communication of the first network and communication of the second network at the same time. In this case, the wireless communication apparatus 200 may transmit the second signal by using the third switch 224->the combiner 221->the first switch 222->the first antenna 231, so that the wireless communication apparatus 200 does not interrupt transmission of the second signal when transmitting a first signal in turn. In addition, when the wireless communication apparatus 200 is in another scenario, for example, a scenario in which only the second network exists, the wireless communication apparatus 200 may transmit the second signal by using the third switch 224->the first switch 222->the first antenna 231, so that the second signal does not need to pass through the combiner 221, thereby reducing a loss of the second signal.

For ease of description, the scenario in which the first network and the second network can be detected may be referred to as a first communication scenario, and the scenario in which only the second network is detected may be referred to as a second communication scenario.

For example, when the wireless communication apparatus 200 is in the first communication scenario, if the wireless communication apparatus 200 is about to send the first signal to the first antenna 231 in turn, the processing circuit 210 may send the second signal to the third switch 224. A first frequency band control signal is sent to the third switch 224, so that the third switch 224 connects, based on the first frequency band control signal, a frequency band port like the port f4 that is of a corresponding frequency band and that is of the third switch 224 and a port like the port p16 that is coupled to the combiner 221 and that is of the third switch 224. A seventh control signal may be sent to the first switch 222, so that the first switch 222 connects, based on the seventh control signal, a port like the port p2 that is connected to the first antenna 231 and that is of the first switch 222 and a port like the port p1 that is coupled to the combiner 221 and that is of the first switch 222. In addition, the processing circuit 210 may further send the first signal to the second switch 223, and may further send an eighth control signal to the second switch 223, so that the second switch 223 connects, based on the eighth control signal, the port p5 that is coupled to the combiner 221 and that is of the second switch 223 and the port p4 that is coupled to the processing circuit 210 and that is of the second switch 223. In this way, the third switch 224 may perform frequency band selection on the second signal, and send a second signal obtained through frequency band selection to the combiner 221, and the second switch 223 may send the first signal to the combiner 221. The combiner 221 may receive the second signal obtained through frequency band selection and the first signal, and then combine the second signal obtained through frequency band selection and the first signal, to obtain a combined signal. Then, the combiner 221 may send the combined signal to the first switch 222, and the second signal obtained through frequency band selection is transmitted from the first antenna 231 by using the first switch 222.

For example, when the wireless communication apparatus 200 is in the first communication scenario, if the first signal is not transmitted to the first antenna 231 in turn, the processing circuit 210 may send the second signal to the third switch 224, control a status of the third switch 224, send the second signal to the combiner 221, control a status of the first switch 222, and transmit the second signal from the first antenna 231.

For example, when the wireless communication apparatus 200 is in the first communication scenario, if the wireless communication apparatus 200 does not transmit the first signal to the first antenna 231 in turn, the processing circuit 210 may send the second signal to the third switch 224. A first frequency band control signal is sent to the third switch 224, so that the third switch 224 connects, based on the first frequency band control signal, a frequency band port like the port f4 that is of a corresponding frequency band and that is of the third switch 224 and a port like the port p16 that is coupled to the combiner 221 and that is of the third switch 224. A ninth control signal may be sent to the first switch 222, so that the first switch 222 connects, based on the ninth control signal, a port like the port p2 that is connected to the first antenna 231 and that is of the first switch 222 and a port like the port p1 that is coupled to the combiner 221 and that is of the first switch 222. In this way, the third switch 224 may perform frequency band selection on the second signal, and send a second signal obtained through frequency band selection to the combiner 221. After receiving the second signal obtained through frequency band selection, the combiner 221 may send the second signal to the first switch 222, and the second signal obtained through frequency band selection is transmitted from the first antenna 231 by using the first switch 222.

For example, when the wireless communication apparatus 200 is in the second communication scenario, the processing circuit 210 may send the second signal to the third switch 224, control the third switch 224, send the second signal to the first switch 222, control a status of the first switch 222, and transmit the second signal from the first antenna 231.

For example, the processing circuit 210 may send the second signal to the third switch 224. A second frequency band control signal is sent to the third switch 224, so that the third switch 224 connects, based on the first frequency band control signal, a frequency band port like the port f2 that is of a corresponding frequency band and that is of the third switch 224 and a port like the port p15 that is coupled to the combiner 221 and that is of the third switch 224. A tenth control signal may be sent to the first switch 222, so that the first switch 222 connects, based on the tenth control signal, a port like the port p2 that is connected to the first antenna 231 and that is of the first switch 222 and an input port like the port p14 that is connected to the third switch 224 and that is of the first switch 222. In this way, after performing frequency band selection on the second signal, the third switch 224 may send a second signal obtained through frequency band selection to the first switch 222. Then, the second signal obtained through frequency band selection may be transmitted from the first antenna 231 by using the first switch 222.

For example, after receiving a signal transmitted by the wireless communication apparatus 200, the base station may make a response, generate a corresponding response signal, and transmit the signal. In addition, the base station may also actively transmit a signal to the wireless communication apparatus 200. In this way, the wireless communication apparatus 200 may receive, by using the antenna, the signal transmitted by the base station. For ease of description, when the wireless communication apparatus 200 is in the first communication scenario, a signal transmitted by a base station of the second network may be referred to as a third signal. In addition, when the wireless communication apparatus 200 is in the second communication scenario, a signal transmitted by the base station of the second network is referred to as a fourth signal.

For example, a path used by the wireless communication apparatus 200 to receive the third signal corresponds to a path used by the wireless communication apparatus 200 to transmit the second signal when the wireless communication apparatus 200 is in the first communication scenario, and may be: the first antenna 231->the first switch 222->the combiner 221->the third switch 224->the processing circuit 210. A path used by the wireless communication apparatus 200 to receive the fourth signal corresponds to a path used by the wireless communication apparatus 200 to transmit the second signal in the second communication scenario, and may be: the first antenna 231->the first switch 222->the third switch 224->the processing circuit 210, to obtain the fourth signal.

Refer to FIG. 5. For example, when the wireless communication apparatus 200 is in the first communication scenario, the first antenna 231 of the wireless communication apparatus 200 may receive the third signal transmitted by the base station, and then may send the third signal to the first switch 222. When the wireless communication apparatus 200 is in the first communication scenario, a port like the port p1 that is coupled to the combiner 221 and that is of the first switch 222 is connected to a port like the port p2 that is coupled to the first antenna 231 and that is of the first switch 222. Therefore, the combiner 221 may receive the third signal by using the first switch 222. Then, the combiner 221 may send the third signal to the third switch 224. When the wireless communication apparatus 200 is in the first communication scenario, a port like the port p16 that is coupled to the combiner 221 and that is of the third switch 224 is connected to a frequency band port like the port f4 of the third switch 224. In this way, the third switch 224 may obtain the third signal from the combiner 221, perform frequency band selection on the third signal, and then send a third signal obtained through frequency band selection to the processing circuit 210. Then, the processing circuit 210 processes the third signal obtained through frequency band selection, for example, performs radio frequency demodulation or baseband demodulation.

For example, when the wireless communication apparatus 200 is in the second communication scenario, the first antenna 231 of the wireless communication apparatus 200 may receive the fourth signal transmitted by the base station, and then may send the fourth signal to the first switch 222. When the wireless communication apparatus 200 is in the first communication scenario, a port like p14 that is coupled to a port (for example, p15) of the third switch 224 and that is of the first switch 222 and a port like p2 that is coupled to the first antenna 231 and that is of the first switch 222 are connected, and a port like p15 that is coupled to the port (for example, p14) of the first switch 222 and that is of the third switch 224 and a frequency band port (for example, f2) of the third switch 224 are connected. In this way, the third switch 224 may receive the fourth signal by using the first switch 222. After frequency band selection is performed on the fourth signal, a fourth signal obtained through frequency band selection is sent to the processing circuit 210. Then, the processing circuit 210 processes the fourth signal obtained through frequency band selection, for example, performs radio frequency demodulation or baseband demodulation.

It should be noted that, in this embodiment of this application, when the wireless communication apparatus 200 is in the first communication scenario, the wireless communication apparatus 200 may also receive the third signal by using the second antenna 232. Then, the third signal is sent to the processing circuit 210 by using the second antenna 232->the first switch 222->the combiner 221->the third switch 224->the processing circuit 210. Details are not described herein again. In addition, when the wireless communication apparatus 200 is in the second communication scenario, the wireless communication apparatus 200 may also receive the fourth signal by using the second antenna 232. Then, the fourth signal is sent to the processing circuit 210 by using the second antenna 232->the first switch 222->the third switch 224->the processing circuit 210. Details are not described herein again. Specifically, it may be determined based on performance of the first antenna 231 and performance of the second antenna 232. This is not limited in this embodiment of this application.

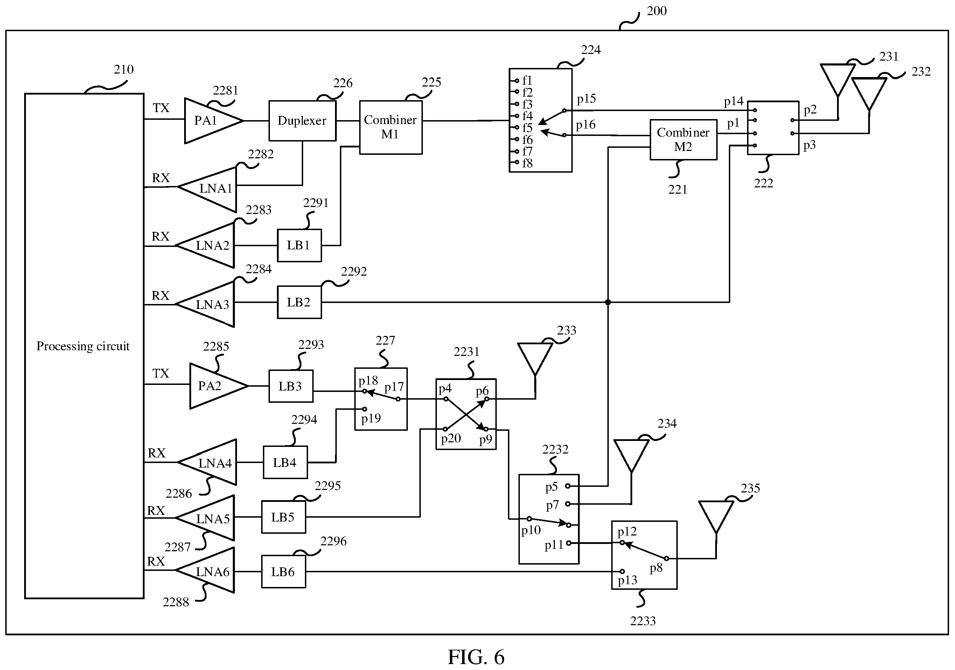

FIG. 6 is a schematic diagram of an example of a structure of a yet another wireless communication apparatus according to an embodiment of this application. A wireless communication apparatus 200 shown in FIG. 6 is only an example of the wireless communication apparatus, and the wireless communication apparatus 200 may have more or fewer components than those shown in the figure, may combine two or more components, or may have different component configurations. Various components shown in FIG. 6 may be implemented by hardware that includes one or more signal processing and/or application-specific integrated circuits, software, or a combination of hardware and software.

In FIG. 6, TX (transmit, transmit) may be a transmit path (TX for short below), and RX (receive, receive) may be a receive path (RX for short below).

The wireless communication apparatus 200 includes a processing circuit 210, a radio frequency front-end module, and an antenna group.

For example, the antenna group includes a first antenna 231, a second antenna 232, a third antenna 233, a fourth antenna 234, and a fifth antenna 235.

For example, the radio frequency front-end module includes: power amplifiers PA1 (2281) and PA2 (2285), a duplexer 226, combiners M1 (225) and M2 (221), a third switch 224, a first antenna switching switch 222, low noise amplifiers LNA1 (2282), LNA2 (2283), LNA3 (2284), LNA4 (2286), LNA5 (2287), and LNA6 (2288), filters LB1 (2291), LB2 (2292), LB3 (2293), LB4 (2294), LB5 (2295), and LB6 (2296), transceiver switches TR1 (227) and TR2 (2233), a second antenna switching switch 2231, and an SRS switch 2232.

For example, the first antenna switching switch 222 may be a double-pole four-throw switch.

For example, the power amplifiers PA1 (2281) and PA2 (2285) are respectively disposed on two TX paths.

For example, the low noise amplifiers LNA1 (2282), LNA2 (2283), LNA3 (2284), LNA4 (2286), LNA5 (2287), and LNA6 (2288) are respectively disposed on six RX paths.

For example, the filters LB1 (2291), LB2 (2292), LB4 (2294), LB5 (2295), and LB6 (2296) are respectively disposed on five RX paths, and the filter LB3 (2293) and the power amplifier PA2 (2285) are disposed on a same TX path.

For example, the processing circuit 210 is separately coupled to PA1 (2281), LNA1 (2282), LNA2 (2283), LNA3 (2284), PA2 (2285), LNA4 (2286), the LNA5 (2287), and LNA6 (2288).

For example, PA1 (2281) is coupled to the duplexer 226, the duplexer 226 is coupled to the combiner M1 (225), the combiner M1 (225) is coupled to the third switch 224, the third switch 224 is coupled to the combiner M2 (221) and the first antenna switching switch 222, and the first antenna switching switch 222 is coupled to the first antenna 231 and the second antenna 232. LNA1 (2282) is coupled to the duplexer 226. LNA2 (2283) is coupled to the filter LB1 (2291), and the filter LB1 (2291) is coupled to the combiner M1 (225). LNA3 (2284) is coupled to the filter LB2 (2292), and the filter LB2 (2292) is coupled to the first antenna switching switch 222.

For example, PA2 (2285) is coupled to the filter LB3 (2293), the filter LB3 (2293) is coupled to the transceiver switch TR1 (227), the transceiver switch TR1 (227) is coupled to the second antenna switching switch 2231, and the second antenna switching switch 2231 is coupled to the SRS switch 2232 and the third antenna 233. The SRS switch 2232 is coupled to the fourth antenna 234, the transceiver switch TR2 (2233), and the combiner M2 (221). The transceiver switch TR2 (2233) is coupled to the fifth antenna 235. LNA4 (2286) is coupled to the filter LB4 (2294), and the filter LB4 (2294) is coupled to the transceiver switch TR1 (227). LNA5 (2287) is coupled to the filter LB5 (2295), and the filter LB5 (2295) is coupled to the second antenna switching switch 2231. LNA6 (2288) is coupled to the filter LB6 (2296), and the filter LB6 (2296) is coupled to the transceiver switch TR2 (2233).

It should be noted that the processing circuit 210 may be further coupled to a control port of the third switch 224, a control port of the first antenna switching switch 222, a control port of the transceiver switch TR1 (227), a control port of the second antenna switching switch 2231, a control port of the SRS switch 2232, and a control port of the transceiver switch TR2 (2233), to send control signals to these switches through the control ports to control the statuses of these switches, which is not shown in FIG. 6.

For example, four transmit channels corresponding to transmission of an SRS in turn by using four paths by the wireless communication apparatus 200 may be respectively:
the processing circuit 210->PA2 (2285)->LB3 (2293)->the transceiver switch TR1 (227)->the second antenna switching switch 2231->the third antenna 233;
the processing circuit 210->PA2 (2285)->LB3 (2293)->the transceiver switch TR1 (227)->the second antenna switching switch 2231->the SRS switch 2232->the fourth antenna 234;
the processing circuit 210->PA2 (2285)->LB3 (2293)->the transceiver switch TR1 (227)->the second antenna switching switch 2231->the SRS switch 2232->the transceiver switch TR2 (2233)->the fifth antenna 235; and
the processing circuit 210->PA2 (2285)->LB3 (2293)->the transceiver switch TR1 (227)->the second antenna switching switch 2231->the SRS switch 2232->the combiner M2 (221)->the first antenna switching switch 222->the first antenna 231.

For example, the first signal may be transmitted from the third antenna 233 by using the channel: the processing circuit 210->PA2 (2285)->LB3 (2293)->the transceiver switch TR1 (227)->the second antenna switching switch 2231->the third antenna 233. A process may be as follows: The processing circuit 210 sends the first signal (which may be referred to as a signal S11 for ease of subsequent description) to PA2 (2285). A second transmit/receive state control signal is sent to the transceiver switch TR1 (227), so that the transceiver switch TR1 (227) is adjusted to a transmit state based on the second transmit/receive state control signal, that is, the port p17 that is coupled to the second antenna switching switch 2231 and that is of the transceiver switch TR1 (227) and the port p18 that is coupled to the filter LB3 (2293) and that is of the transceiver switch TR1 (227) are connected. A sixth antenna switching control signal is sent to the second antenna switching switch 2231, so that the second antenna switching switch 2231 controls, based on the sixth antenna switching control signal, the port p6 that is coupled to the third antenna 233 and that is of the second antenna switching switch 2231 and the port p4 that is coupled to the transceiver switch TR1 (227) and that is of the second antenna switching switch 2231 to be connected. After receiving the first signal, PA2 (2285) may amplify the signal S11 to obtain a signal S12, and send the signal S12 to the filter LB3 (2293). The filter LB3 (2293) may filter the signal S12 to obtain a signal S13 and send the signal S13 to the transceiver switch TR1 (227). The transceiver switch TR1 (227) sends the signal S13 to the second antenna switching switch 2231, and then the signal S13 is transmitted from the third antenna 233 by using the second antenna switching switch 2231.

For example, the first signal may be transmitted from the fourth antenna 234 by using the path: the processing circuit 210->PA2 (2285)->LB3 (2293)->the transceiver switch TR1 (227)->the second antenna switching switch 2231->the SRS switch 2232->the fourth antenna 234. A process may be as follows: The processing circuit 210 sends the first signal (which may be referred to as a signal S11 for ease of subsequent description) to PA2 (2285). A third transmit/receive state control signal is sent to the transceiver switch TR1 (227), so that the transceiver switch TR1 (227) is adjusted to a transmit state based on the third transmit/receive state control signal, that is, the port p17 that is coupled to the second antenna switching switch 2231 and that is of the transceiver switch TR1 (227) and the port p18 that is coupled to the filter LB3 (2293) and that is of the transceiver switch TR1 (227) are connected. A seventh antenna switching control signal may be sent to the second antenna switching switch 2231, so that the second antenna switching switch 2231 connects, based on the seventh antenna switching control signal, the port p9 that is coupled to the SRS switch 2232 and that is of the second antenna switching switch 2231 and the port p4 that is coupled to the transceiver switch TR1 (227) and that is of the second antenna switching switch 2231. A fourth SRS status control signal may be sent to the SRS switch 2232, so that the SRS switch 2232 connects, based on the fourth SRS status control signal, the port p7 that is coupled to the fourth antenna 234 and that is of the SRS switch 2232 and the port p10 that is coupled to the second antenna switching switch 2231 and that is of the SRS switch 2232. After receiving the first signal, PA2 (2285) may amplify the signal S11 to obtain a signal S12, and send the signal S12 to the filter LB3 (2293). The filter LB3 (2293) may filter the signal S12 to obtain a signal S13 and send the signal S13 to the transceiver switch TR1 (227). The signal S13 is sent to the second antenna switching switch 2231 by using the transceiver switch TR1 (227). The signal S13 may be sent to the SRS switch 2232 by using the second antenna switching switch 2231, and the signal S13 may be transmitted from the fourth antenna 234 by using the SRS switch 2232.

For example, the first signal may be transmitted from the fifth antenna 235 by using the path: the processing circuit 210->PA2 (2285)->LB3 (2293)->the transceiver switch TR1 (227)->the second antenna switching switch 2231->the SRS switch 2232->the transceiver switch TR2 (2233)->the fifth antenna 235. A process may be as follows: The processing circuit 210 sends the first signal (which may be referred to as a signal S11 for ease of subsequent description) to PA2 (2285). A fourth transmit/receive state control signal is sent to the transceiver switch TR1 (227), so that the transceiver switch TR1 (227) is adjusted to a transmit state based on the fourth transmit/receive state control signal, that is, the port p17 that is coupled to the second antenna switching switch 2231 and that is of the transceiver switch TR1 (227) and the port p18 that is coupled to the filter LB3 (2293) and that is of the transceiver switch TR1 (227) are connected. A seventh antenna switching control signal may be sent to the second antenna switching switch 2231, so that the second antenna switching switch 2231 connects, based on the seventh antenna switching control signal, the port p9 that is coupled to the SRS switch 2232 and that is of the second antenna switching switch 2231 and the port p4 that is coupled to the transceiver switch TR1 (227) and that is of the second antenna switching switch 2231. A fifth SRS status control signal may be sent to the SRS switch 2232, so that the SRS switch 2232 connects, based on the fifth SRS status control signal, the port p11 that is coupled to the transceiver switch TR2 (2233) and that is of the SRS switch 2232 and the port p10 that is coupled to the second antenna switching switch 2231 and that is of the SRS switch 2232. A fifth transmit/receive state control signal may be sent to the transceiver switch TR2 (2233), so that the transceiver switch TR2 (2233) is adjusted to a transmit state based on the fifth transmit/receive state control signal, that is, the port p8 that is coupled to the fifth antenna 235 and that is of the transceiver switch TR2 (2233) and the port p12 that is coupled to the SRS switch 2232 and that is of the transceiver switch TR2 (2233) are connected. After receiving the first signal, PA2 (2285) may amplify the signal S11 to obtain a signal S12, and send the signal S12 to the filter LB3 (2293). The filter LB3 (2293) may filter the signal S12 to obtain a signal S13 and send the signal S13 to the transceiver switch TR1 (227). The signal S13 is sent to the second antenna switching switch 2231 by using the transceiver switch TR1 (227). The signal S13 may be sent to the SRS switch 2232 by using the second antenna switching switch 2231, the signal S13 may be sent to the transceiver switch TR2 (2233) by using the SRS switch 2232, and then the signal S13 is transmitted from the fifth antenna 235 by using the transceiver switch TR2 (2233).

For example, the first signal may be transmitted from the first antenna 231 by using the path: the processing circuit 210->PA2 (2285)->LB3 (2293)->the transceiver switch TR1 (227)->the second antenna switching switch 2231->the SRS switch 2232->the combiner M2 (221)->the first antenna switching switch 222->the first antenna 231. A process may be as follows: The processing circuit 210 sends the first signal (which may be referred to as a signal S11 for ease of subsequent description) to PA2 (2285). A sixth transmit/receive state control signal is sent to the transceiver switch TR1 (227), so that the transceiver switch TR1 (227) is adjusted to a transmit state based on the sixth transmit/receive state control signal, that is, the port p17 that is coupled to the second antenna switching switch 2231 and that is of the transceiver switch TR1 (227) and the port p18 that is coupled to the filter LB3 (2293) and that is of the transceiver switch TR1 (227) are connected. A seventh antenna switching control signal may be sent to the second antenna switching switch 2231, so that the second antenna switching switch 2231 connects, based on the seventh antenna switching control signal, the port p9 that is coupled to the SRS switch 2232 and that is of the second antenna switching switch 2231 and the port p4 that is coupled to the transceiver switch TR1 (227) and that is of the second antenna switching switch 2231. A sixth SRS status control signal may be sent to the SRS switch 2232, so that the SRS switch 2232 connects, based on the sixth SRS status control signal, the port p5 that is coupled to the combiner M2 (221) and that is of the SRS switch 2232 and the port p10 that is coupled to the second antenna switching switch 2231 and that is of the SRS switch 2232. A tenth antenna switching control signal may be sent to the first antenna switching switch 222, so that the first antenna switching switch 222 connects, based on the tenth antenna switching control signal, the port p2 that is coupled to the first antenna 231 and that is of the first antenna switching switch 222 and the port p1 that is coupled to the combiner M2 (221) and that is of the first antenna switching switch 222. After receiving the first signal, PA2 (2285) may amplify the signal S11 to obtain a signal S12, and send the signal S12 to the filter LB3 (2293). The filter LB3 (2293) may filter the signal S12 to obtain a signal S13 and send the signal S13 to the transceiver switch TR1 (227). The signal S13 is sent to the second antenna switching switch 2231 by using the transceiver switch TR1 (227). The signal S13 may be sent to the SRS switch 2232 by using the second antenna switching switch 2231, and the signal S13 may be sent to the combiner M2 (221) by using the SRS switch 2232. Next, the combiner M2 (221) sends the signal S13 to the first antenna switching switch 222, and then the signal S13 may be transmitted from the first antenna 231 by using the first antenna switching switch 222.

For example, an occasion at which the processing circuit 210 sends a control signal to the transceiver switch TR1 (227) may be set based on a requirement. This is not limited in this embodiment of this application. This occasion may be any time from a time point at which the processing circuit 210 obtains the first signal to a time point at which the first signal is sent to the transceiver switch TR1 (227).

For example, an occasion at which the processing circuit 210 sends a control signal to the transceiver switch TR2 (2233) may be set based on a requirement. This is not limited in this embodiment of this application. This occasion may be any time from at time point at which the processing circuit 210 obtains the first signal to a time point at which the first signal is sent to the transceiver switch TR2 (2233).

For example, an occasion at which the processing circuit 210 sends a control signal to the second antenna switching switch 2231 may be set based on a requirement. This is not limited in this embodiment of this application. This occasion may be any time from a time point at which the processing circuit 210 obtains the first signal to a time point at which the first signal is sent to the second antenna switching switch 2231.

For example, an occasion at which the processing circuit 210 sends a control signal to the first antenna switching switch 222 may be set based on a requirement. This is not limited in this embodiment of this application. This occasion may be any time from a time point at which the processing circuit 210 obtains the first signal to a time point at which the first signal is sent to the first antenna switching switch 222.

For example, an occasion at which the processing circuit 210 sends a control signal to the SRS switch 2232 may be set based on a requirement. This is not limited in this embodiment of this application. This occasion may be any time from a time point at which the processing circuit 210 obtains the first signal to a time point at which the first signal is sent to the SRS switch 2232.

It should be noted that a sequence in which the wireless communication apparatus 200 transmits the first signal in turn is not limited in this embodiment of this application, and may be set based on a requirement. This is not limited in this embodiment of this application. For example, the first signal may be transmitted in turn according to a sequence of the first antenna 231, the third antenna 233, the fourth antenna 234, and the fifth antenna 235. For another example, the first signal may be transmitted in turn according to a sequence of the third antenna 233, the fourth antenna 234, the fifth antenna 235, and the first antenna 231.

For example, refer to FIG. 6. The wireless communication apparatus 200 may transmit the second signal by using the following two channels:
the processing circuit 210->PA1 (2281)->the duplexer 226->the combiner M1 (225)->the third switch 224->the first antenna switching switch 222->the first antenna 231; and
the processing circuit 210->PA1 (2281)->the duplexer 226->the combiner M1 (225)->the third switch 224->the combiner M2 (221)->the first antenna switching switch 222->the first antenna 231.

For example, when the wireless communication apparatus 200 is in a first scenario, the processing circuit 210 may send the second signal (which may be referred to as a signal S21 subsequently for ease of description) to PA1 (2281). A third frequency band status control signal is sent to the third switch 224, so that the third switch 224 connects, based on the third frequency band status control signal, the data port p16 that is coupled to the combiner M2 (221) and that is of the third switch 224 and the frequency band port f4 of the third switch 224. An eleventh antenna switching control signal may be sent to the first antenna switching switch 222, so that the first antenna switching switch 222 connects, based on the eleventh antenna switching control signal, the port p2 that is connected to the first antenna 231 and that is of the first antenna switching switch 222 and the input port p1 that is connected to the combiner M2 (221) and that is of the first antenna switching switch 222. In this way, PA1 (2281) may amplify the signal S21 to obtain a signal S22, and send the signal S22 to the duplexer 226. After filtering the signal S22, the duplexer 226 may obtain a signal S23, and then send the signal S23 to the combiner M1 (225), and the combiner M1 (225) sends the signal S23 to the third switch 224. After performing frequency band selection on the signal S23, the third switch 224 obtains a signal S24 and sends the signal S24 to the combiner M2 (221). If the wireless communication apparatus 200 is about to send the first signal to the first antenna 231 in turn, the processing circuit 210 may further send the first signal (which may be referred to as a signal S11 for ease of subsequent description) to PA2 (2285). A sixth transmit/receive state control signal is sent to the transceiver switch TR1 (227), so that the transceiver switch TR1 (227) is adjusted to a transmit state based on the sixth transmit/receive state control signal, that is, the port p17 that is coupled to the second antenna switching switch 2231 and that is of the transceiver switch TR1 (227) and the port p18 that is coupled to the filter LB3 (2293) and that is of the transceiver switch TR1 (227) are connected. A seventh antenna switching control signal may be sent to the second antenna switching switch 2231, so that the second antenna switching switch 2231 connects, based on the seventh antenna switching control signal, the port p9 that is coupled to the SRS switch 2232 and that is of the second antenna switching switch 2231 and the port p4 that is coupled to the transceiver switch TR1 (227) and that is of the second antenna switching switch 2231. A sixth SRS status control signal may be sent to the SRS switch 2232, so that the SRS switch 2232 connects, based on the sixth SRS status control signal, the port p5 that is coupled to the combiner M2 (221) and that is of the SRS switch 2232 and the port p10 that is coupled to the second antenna switching switch 2231 and that is of the SRS switch 2232. A tenth antenna switching control signal may be sent to the first antenna switching switch 222, so that the first antenna switching switch 222 connects, based on the tenth antenna switching control signal, the port p2 that is coupled to the first antenna 231 and that is of the first antenna switching switch 222 and the port p1 that is coupled to the combiner M2 (221) and that is of the first antenna switching switch 222. After receiving the first signal, PA2 (2285) may amplify the signal S11 to obtain a signal S12, and send the signal S12 to the filter LB3 (2293). The filter LB3 (2293) may filter the signal S12 to obtain a signal S13 and send the signal S13 to the transceiver switch TR1 (227). The signal S13 is sent to the second antenna switching switch 2231 by using the transceiver switch TR1 (227). The signal S13 may be sent to the SRS switch 2232 by using the second antenna switching switch 2231, and the signal S13 may be sent to the combiner M2 (221) by using the SRS switch 2232. In this way, the combiner M2 (221) may receive the signals S13 and S24, combine the signals S13 and S24 to obtain a combined signal, and then send the signal S24 to the first antenna switching switch 222, and the signal S24 obtained through frequency band conversion is transmitted from the first antenna 231 by using the first antenna switching switch 222.

For example, when the wireless communication apparatus 200 is in a second scenario, the second signal may be transmitted through a first channel. A process in which the wireless communication apparatus 200 transmits the second signal may be as follows: The processing circuit 210 may send the second signal (which may be referred to as a signal S21 subsequently for ease of description) to PA1 (2281). A fourth frequency band status control signal is sent to the third switch 224, so that the third switch 224 connects, based on the fourth frequency band status control signal, the frequency band port f2 of the third switch 224 and the port p15 that is coupled to the first antenna switching switch 222 and that is of the third switch 224. A twelfth antenna switching switch control signal may be sent to the first antenna switching switch 222, so that the first antenna switching switch 222 connects, based on the twelfth antenna switching switch control signal, the port p2 that is connected to the first antenna 23 1 and that is of the first antenna switching switch 222 and the input port p14 that is connected to the third switch 224 and that is of the first antenna switching switch 222. In this way, PA1 (2281) may amplify the signal S21 to obtain a signal S22, and send the signal S22 to the duplexer 226. After filtering the signal S22, the duplexer 226 may obtain a signal S23, and then send the signal S23 to the combiner M1 (225), and the combiner M1 (225) sends the signal S23 to the third switch 224. After performing frequency band selection on the signal S23, the third switch 224 obtains a signal S24 and sends the signal S24 to the first antenna switching switch 222. The signal S24 obtained through frequency band conversion is transmitted from the first antenna 231 by using the first antenna switching switch 222.

For example, when the wireless communication apparatus 200 is in a first communication scenario, the wireless communication apparatus 200 may obtain a third signal by using the first antenna 231->the first antenna switching switch 222->the combiner M2 (221)->the third switch 224->the combiner M1 (225)->the duplexer 226->LNA1 (2282)->the processing circuit 210.

For example, when the wireless communication apparatus 200 is in the first communication scenario, the first antenna 231 of the wireless communication apparatus 200 may receive the third signal (which may be referred to as S31 subsequently for ease of description) transmitted by the base station, and then may send the signal S31 to the first antenna switching switch 222. When the wireless communication apparatus 200 is in the first communication scenario, the port p1 that is coupled to the combiner M2 (221) and that is of the first antenna switching switch 222 and the port p2 that is coupled to the first antenna 231 and that is of the first antenna switching switch 222 are connected. In this way, the combiner M2 (221) may receive the signal S31 by using the first antenna switching switch 222. Then, the combiner M2 (221) may send the signal S31 to the third switch 224, and after the third switch 224 performs frequency band selection on the signal S31, a signal S32 is obtained and sent to the combiner M1 (225). The combiner M1 (225) may send the signal S32 to the duplexer 226, and the duplexer 226 filters the signal S32 to obtain a signal S33 and sends the signal S33 to LNA1 (2282). LNA1 (2282) amplifies the signal S33 to obtain a signal S34, and then sends the signal S34 to the processing circuit 210. Then, the processing circuit 210 processes the third signal, for example, performs radio frequency demodulation or baseband demodulation.

For example, when the wireless communication apparatus 200 is in a second communication scenario, the wireless communication apparatus 200 may obtain a fourth signal by using the first antenna 231->the first antenna switching switch 222->the third switch 224->the combiner M1 (225)->the duplexer 226->LNA1 (2282)->the processing circuit 210.

For example, when the wireless communication apparatus 200 is in the second communication scenario, the first antenna 231 of the wireless communication apparatus 200 may receive the fourth signal (which may be referred to as S41 subsequently for ease of description) transmitted by the base station, and then may send the signal S41 to the first antenna switching switch 222. When the wireless communication apparatus 200 is in the second communication scenario, the port p14 that is coupled to the third switch 224 and that is of the first antenna switching switch 222 and the port p2 that is coupled to the first antenna 231 and that is of the first antenna switching switch 222 are connected, and the frequency band port f2 of the third switch 224 and the port p15 that is coupled to the first antenna switching switch 222 and that is of the third switch 224 are connected. Therefore, the third switch 224 may receive a signal S41 by using the first antenna switching switch 222. Then, the third switch 224 may perform frequency band selection on the signal S41 to obtain a signal S42 and send the signal S42 to the combiner M1 (225). The combiner M1 (225) may send the signal S42 to the duplexer 226, and the duplexer 226 filters the signal S42 to obtain a signal S43 and sends the signal S33 to LNA1 (2282). LNA1 (2282) amplifies the signal S43 to obtain a signal S44, and then sends the signal S44 to the processing circuit 210. Then, the processing circuit 210 processes the third signal, for example, performs radio frequency demodulation or baseband demodulation.

For example, a path used by the wireless communication apparatus 200 to receive the third signal or the fourth signal may further include: the second antenna 232->the first antenna switching switch 222->LB2 (2292)->LNA3 (2284)->the processing circuit 210, to obtain the third signal or the fourth signal.

For example, a path used by the wireless communication apparatus 200 to receive another signal of the first network may include:
the first antenna 231->the first antenna switching switch 222->the combiner M2 (221)->the third switch 224->the combiner M1 (225)->LB1 (2291)->LNA2 (2283)->the processing circuit 210 (or the second antenna 232->the first antenna switching switch 222->the combiner M2 (221)->the third switch 224->the combiner M1 (225)->LB1 (2291)->LNA2 (2283)->the processing circuit 210);
the third antenna 233->the second antenna switching switch 2231->the transceiver switch TR1 (227)->LB4 (2294)->LNA4 (2286)->the processing circuit 210;
the fourth antenna 234->the SRS switch 2232->the second antenna switching switch 2231->LB5 (2295)->LNA5 (2287)->the processing circuit 210; and
the fifth antenna 235->the transceiver switch TR2 (2233)->LB6 (2296)->LNA6 (2288)->the processing circuit 210.

It should be noted that, when the wireless communication apparatus is in the first communication scenario, if the first signal and the second signal need to be transmitted from the second antenna 232, in addition to controlling the port p1 and the port p3 of the first switch 222 to be connected, states of other switches are similar to states of other switches when the wireless communication apparatus is in the first communication scenario and sends the first signal and the second signal from the first antenna 231. Details are not described herein again.

For example, when the wireless communication apparatus is in the second communication scenario, if the second signal needs to be transmitted from the second antenna 232, in addition to controlling the port p14 and the port p3 of the first switch 222 to be connected, states of other switches are similar to states of other switches when the wireless communication apparatus is in the second communication scenario and sends the second signal from the first antenna 231. Details are not described herein again.

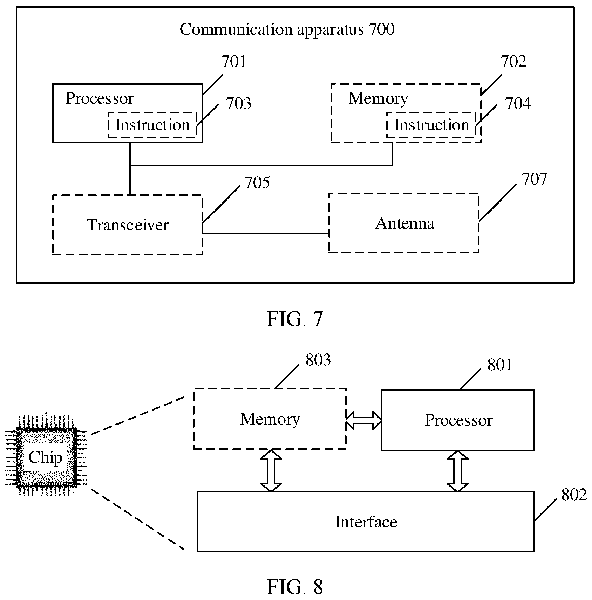

The following describes an apparatus provided in an embodiment of this application. Details are shown in FIG. 7.

FIG. 7 is a schematic diagram of a structure of a communication apparatus according to an embodiment of this application. As shown in FIG. 7, the communication apparatus 700 may include a processor 701 and a transceiver 705, and optionally further includes a memory 702.

The transceiver 705 may be referred to as a transceiver unit, a transceiver machine, a transceiver circuit, or the like, and is configured to implement a transmitting/receiving function. The transceiver 705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function.

The memory 702 may store a computer program, software code, or an instruction 704, and the computer program, the software code, or the instruction 704 may also be referred to as firmware. The processor 701 may control a MAC layer and a PHY layer by running a computer program, software code, or an instruction 703 in the processor 701, or by invoking the computer program, the software code, or the instruction 704 stored in the memory 702, to implement the methods provided in the following embodiments of this application. The processor 701 may be a central processing unit (central processing unit, CPU), a baseband processor, and a radio frequency processor, and the memory 702 may be, for example, a read-only memory (read-only memory, ROM) or a random access memory (random access memory, RAM).

The processor 701 and the transceiver 705 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communication apparatus 700 may further include an antenna 706. The modules included in the communication apparatus 700 are merely examples for description, and are not limited in this application.

As described above, the communication apparatus described in the foregoing embodiment may be a terminal. However, a scope of the communication apparatus described in this application is not limited thereto, and the structure of the communication apparatus may not be limited in FIG. 7. The communication apparatus may be an independent device or may be a part of a large device. For example, the communication apparatus may be implemented in the following form:
(1) an independent integrated circuit IC, a chip, a chip system, or a subsystem, for example, the apparatus 700 may be the Wi-Fi chip in the foregoing embodiments; (2) a set including one or more ICs, where optionally, the set of ICs may also include a storage component for storing data and instructions; (3) a module that can be embedded in other device; (4) a receiver, an intelligent terminal, a wireless device, a handheld device, a mobile unit, a vehicle-mounted device, a cloud device, an artificial intelligence device, or the like; or (5) others.

For the communication apparatus implemented in the form of the chip or the chip system, refer to a schematic diagram of a structure of a chip shown in FIG. 8. The chip shown in FIG. 8 includes a processor 801 and an interface 802. There may be one or more processors 801, and there may be a plurality of interfaces 802. Optionally, the chip or the chip system may include a memory 803.

In a possible implementation, a processing circuit and a radio frequency front-end module are integrated into the chip, and another component, including an antenna, and the like, is disposed outside the chip.

In another possible implementation, the processing circuit is integrated into the chip, and the antenna and the radio frequency front-end module are disposed outside the chip.

All related content of the steps in the foregoing method embodiments may be cited in function descriptions of the corresponding function modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a terminal device, to control the terminal device to implement the foregoing method embodiments.

Based on a same technical concept, an embodiment of this application further provides a computer program. When the computer program is executed by a terminal device, the computer program is used to implement the foregoing method embodiments.

The program may be all or partially stored in a storage medium that is encapsulated with a processor, or may be all or partially stored in a memory that is not encapsulated with a processor.

Based on a same technical concept, an embodiment of this application further provides a processor. The processor is configured to implement the foregoing method embodiments. The processor may be a chip.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be disposed in a network device. Certainly, the processor and the storage medium may exist in a network device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A wireless communication apparatus (200), comprising:
an antenna group (230), comprising a first antenna (231), a second antenna (232), a third antenna (233), a fourth antenna (234), and a fifth antenna (235);
a radio frequency front-end module (220), comprising a combiner (221), wherein the combiner is coupled to the first antenna; and
a processing circuit (210), coupled to the combiner and the antenna group, and configured to:
transmit a first signal from the third antenna, the fourth antenna, and the fifth antenna in turn; and
send the first signal and a second signal to the combiner, and transmit the first signal and the second signal from the first antenna by using the combiner, wherein
the first signal is a sounding reference signal SRS of a first network, and the second signal is a signal of a second network;
wherein
the radio frequency front-end module (220) further comprises a first switch (222) and a second switch (223), the combiner (221) is coupled to the first switch, the first switch is coupled to the first antenna (231) and the second antenna (232), and the second switch is coupled to the third antenna (233), the fourth antenna (234), the fifth antenna (235), and the combiner; and
the processing circuit (210) is further coupled to the first switch and the second switch, and is configured to: control a status of the second switch, and transmit the first signal from the third antenna, the fourth antenna, and the fifth antenna in turn; control the status of the second switch, send the first signal to the combiner, and send the second signal to the combiner; and control a status of the first switch, and transmit the first signal and the second signal from the first antenna by sequentially using the combiner and the first switch.

2. The wireless communication apparatus (200) according to claim 1, wherein
the radio frequency front-end module (220) further comprises a third switch (224), wherein the third switch is coupled to the first switch (222) and the combiner (221);
the processing circuit (210) is further coupled to the third switch, and is configured to:
in a first communication scenario, control a status of the third switch, and send the second signal to the combiner; and
the processing circuit is further configured to:
in a second communication scenario, control a status of the third switch and a status of the first switch, and transmit the second signal from the first antenna (231) by sequentially using the third switch and the first switch.

3. The wireless communication apparatus (200) according to claim 2, wherein
the processing circuit (210) is further configured to:
in the first communication scenario, control the status of the third switch (224) and a status of the first switch (222), and receive a third signal from the first antenna (231) by sequentially using the first switch, the combiner (221), and the third switch; and
in the second communication scenario, control the status of the third switch and the status of the first switch, and receive a fourth signal from the first antenna by sequentially using the first switch and the third switch, wherein
the third signal and the fourth signal are signals of the second network.

4. The wireless communication apparatus (200) according to claim 2, wherein the first communication scenario comprises an EN-DC scenario; and the second communication scenario comprises a scenario in which only a 4G network exists.

5. A signal transmission method, wherein the method is applied to a wireless communication apparatus (200), the apparatus comprises a processing circuit (210), a radio frequency front-end module (220), and an antenna group (230), the radio frequency front-end module comprises a combiner (221), the antenna group comprises a first antenna (231), a second antenna (232), a third antenna (233), a fourth antenna (234), and a fifth antenna (235), and the method comprises:
transmitting, by the processing circuit, a first signal from the third antenna, the fourth antenna, and the fifth antenna in turn; and sending the first signal and a second signal to the combiner, and transmitting the first signal and the second signal from the first antenna by using the combiner,
wherein the first signal is a sounding reference signal SRS of a first network, and the second signal is a signal of a second network;
wherein
the radio frequency front-end module (220) further comprises a first switch (222) and a second switch (223); the transmitting, by the processing circuit (210), a first signal from the third antenna (233), the fourth antenna (234), and the fifth antenna (235) in turn comprises:
controlling, by the processing circuit, a status of the second switch, and transmitting the first signal from the third antenna, the fourth antenna, and the fifth antenna in turn; and
the sending the first signal and a second signal to the combiner (221), and transmitting the first signal and the second signal from the first antenna by using the combiner comprises:
controlling, by the processing circuit, the status of the second switch, sending the first signal to the combiner, and sending the second signal to the combiner; and controlling a status of the first switch, and transmitting the first signal and the second signal from the first antenna by sequentially using the combiner and the first switch.

6. The method according to claim 5, wherein
the radio frequency front-end module (220) further comprises a third switch (224);
the sending the second signal to the combiner (221) comprises:
when the wireless communication apparatus is in a first communication scenario, controlling, by the processing circuit (210), a status of the third switch, and sending the second signal to the combiner; and
the method further comprises: when the wireless communication apparatus (200) is in a second communication scenario, controlling, by the processing circuit, a status of the third switch and a status of the first switch, and transmitting the second signal from the first antenna (231) by sequentially using the third switch and the first switch.

7. The method according to claim 6, wherein the method further comprises:
when the wireless communication apparatus (200) is in the first communication scenario, controlling, by the processing circuit (210), the status of the third switch (224) and a status of the first switch (222), and receiving a third signal from the first antenna (231) by sequentially using the first switch, the combiner (221), and the third switch; and
when the wireless communication apparatus is in the second communication scenario, controlling, by the processing circuit, the status of the third switch and the status of the first switch, and receiving a fourth signal from the first antenna by sequentially using the first switch and the third switch, wherein the third signal and the fourth signal are signals of the second network.

8. The method according to claim 6, wherein the first communication scenario comprises an EN-DC scenario; and the second communication scenario comprises a scenario in which only a 4G network exists.

9. A radio frequency front-end module (220), comprising a first switch (222), a second switch (223), a third switch (224), and a combiner (221), wherein
the second switch is separately coupled to a processing circuit (210), a third antenna (233), a fourth antenna (234), a fifth antenna (235), and the combiner (221), and is configured to: in a first communication scenario, receive a first signal from the processing circuit, and send the first signal to the third antenna, the fourth antenna, the fifth antenna, and the combiner in turn based on control of the processing circuit;
the third switch is separately coupled to the processing circuit, the combiner, and the first switch, and is configured to: in the first communication scenario, receive a second signal from the processing circuit, and send the second signal to the combiner based on control of the processing circuit; and in a second communication scenario, receive a second signal from the processing circuit, and send the second signal to the first switch based on control of the processing circuit;
the combiner is separately coupled to the first switch, the second switch, and the third switch, and is configured to: in the first communication scenario, receive the second signal from the third switch, receive the first signal from the second switch, combine the first signal and the second signal, and send a combined signal obtained through combination to the first switch; and
the first switch is separately coupled to the combiner, the third switch, a first antenna, and a second antenna, and is configured to: in the first communication scenario, receive the combined signal, and transmit the combined signal from the first antenna based on control of the processing circuit; and in the second communication scenario, receive the second signal, and transmit the second signal from the first antenna based on control of the processing circuit.

10. A chip, comprising at least one processor (801), a memory (803), and an interface (802), wherein the processor is coupled to a radio frequency front-end module (220) through the interface; and the at least one processor is configured to invoke instructions stored in the memory, to perform a step of performing signal transmission in the method according to any one of claims 5 to 8.

11. A computer-readable storage medium, wherein the computer-readable storage medium stores a computer program, and when the computer program is run on a computer or a processor, the computer or the processor is enabled to perform a step performed by the processing circuit (210) in the method according to any one of claims 5 to 8.

12. A computer program product, wherein the computer program product comprises a software program, and when the software program is executed by a computer or a processor, a step performed by the processing circuit (210) in the method according to any one of claims 5 to 8 is enabled to be performed.

## Patentansprüche

1. Drahtloskommunikationsvorrichtung (200), die Folgendes umfasst:
eine Antennengruppe (230), die eine erste Antenne (231), eine zweite Antenne (232), eine dritte Antenne (233), eine vierte Antenne (234) und eine fünfte Antenne (235) umfasst;
ein Hochfrequenz-Frontend-Modul (220), das einen Kombinierer (221) umfasst, wobei der Kombinierer an die erste Antenne gekoppelt ist; und
eine Verarbeitungsschaltung (210), die an den Kombinierer und die Antennengruppe gekoppelt ist und konfiguriert ist zum:
Übertragen eines ersten Signals der Reihe nach von der dritten Antenne, der vierten Antenne und der fünften Antenne; und
Senden des ersten Signals und eines zweiten Signals zum Kombinierer und Übertragen des ersten Signals und des zweiten Signals von der ersten Antenne unter Verwendung des Kombinierers, wobei
das erste Signal ein Sondierungsbezugssignal SRS eines ersten Netzes ist und das zweite Signal ein Signal eines zweiten Netzes ist;
wobei
das Hochfrequenz-Frontend-Modul (220) ferner einen ersten Schalter (222) und einen zweiten Schalter (223) umfasst, der Kombinierer (221) an den ersten Schalter gekoppelt ist, der erste Schalter an die erste Antenne (231) und die zweite Antenne (232) gekoppelt ist und der zweite Schalter an die dritte Antenne (233), die vierte Antenne (234), die fünfte Antenne (235) und den Kombinierer gekoppelt ist; und
die Verarbeitungsschaltung (210) ferner an den ersten Schalter und den zweiten Schalter gekoppelt ist und konfiguriert ist zum: Steuern eines Status des zweiten Schalters und Übertragen des ersten Signals der Reihe nach von der dritten Antenne, der vierten Antenne und der fünften Antenne; Steuern des Status des zweiten Schalters, Senden des ersten Signals zum Kombinierer und Senden des zweiten Signals zum Kombinierer; und Steuern eines Status des ersten Schalters und Übertragen des ersten Signals und des zweiten Signals von der ersten Antenne durch sequenzielles Verwenden des Kombinierers und des ersten Schalters.

2. Drahtloskommunikationsvorrichtung (200) nach Anspruch 1, wobei
das Hochfrequenz-Frontend-Modul (220) ferner einen dritten Schalter (224) umfasst, wobei der dritte Schalter an den ersten Schalter (222) und den Kombinierer (221) gekoppelt ist; und
die Verarbeitungsschaltung (210) ferner an den dritten Schalter gekoppelt ist und zu Folgendem konfiguriert ist:
in einem ersten Kommunikationsszenario Steuern eines Status des dritten Schalters und Senden des zweiten Signals zum Kombinierer; und
wobei die Verarbeitungsschaltung ferner zu Folgendem konfiguriert ist:
in einem zweiten Kommunikationsszenario Steuern eines Status des dritten Schalters und eines Status des ersten Schalters und Übertragen des zweiten Signals von der ersten Antenne (231) durch sequenzielles Verwenden des dritten Schalters und des ersten Schalters.

3. Drahtloskommunikationsvorrichtung (200) nach Anspruch 2, wobei die Verarbeitungsschaltung (210) ferner zu Folgendem konfiguriert ist:
im ersten Kommunikationsszenario Steuern des Status des dritten Schalters (224) und eines Status des ersten Schalters (222) und Empfangen eines dritten Signals von der ersten Antenne (231) durch sequenzielles Verwenden des ersten Schalters, des Kombinierers (221) und des dritten Schalters; und
im zweiten Kommunikationsszenario Steuern des Status des dritten Schalters und des Status des ersten Schalters und Empfangen eines vierten Signals von der ersten Antenne durch sequenzielles Verwenden des ersten Schalters und des dritten Schalters, wobei
das dritte Signal und das vierte Signal Signale des zweiten Netzes sind.

4. Drahtloskommunikationsvorrichtung (200) nach Anspruch 2, wobei das erste Kommunikationsszenario ein EN-DC-Szenario umfasst und das zweite Kommunikationsszenario ein Szenario umfasst, in dem lediglich ein 4G-Netz vorhanden ist.

5. Signalübertragungsverfahren, wobei das Verfahren auf eine Drahtloskommunikationsvorrichtung (200) angewendet wird, die Vorrichtung eine Verarbeitungsschaltung (210), ein Hochfrequenz-Frontend-Modul (220) und eine Antennengruppe (230) umfasst, das Hochfrequenz-Frontend-Modul einen Kombinierer (221) umfasst, die Antennengruppe eine erste Antenne (231), eine zweite Antenne (232), eine dritte Antenne (233), eine vierte Antenne (234) und eine fünfte Antenne (235) umfasst und das Verfahren Folgendes umfasst:
Übertragen durch die Verarbeitungsschaltung eines ersten Signals der Reihe nach von der dritten Antenne, der vierten Antenne und der fünften Antenne; und Senden des ersten Signals und eines zweiten Signals zum Kombinierer und Übertragen des ersten Signals und des zweiten Signals von der ersten Antenne unter Verwendung des Kombinierers,
wobei das erste Signal ein Sondierungsbezugssignal SRS eines ersten Netzes ist und das zweite Signal ein Signal eines zweiten Netzes ist;
wobei
das Hochfrequenz-Frontend-Modul (220) ferner einen ersten Schalter (222) und einen zweiten Schalter (223) umfasst und das Übertragen durch die Verarbeitungsschaltung (210) eines ersten Signals von der dritten Antenne (233), der vierten Antenne (234) und der fünften Antenne (235) der Reihe nach Folgendes umfasst:
Steuern durch die Verarbeitungsschaltung eines Status des zweiten Schalters und Übertragen des ersten Signals der Reihe nach von der dritten Antenne, der vierten Antenne und der fünften Antenne; und
das Senden des ersten Signals und eines zweiten Signals zum Kombinierer (221) und Übertragen des ersten Signals und des zweiten Signals von der ersten Antenne unter Verwendung des Kombinierers Folgendes umfasst:
Steuern durch die Verarbeitungsschaltung des Status des zweiten Schalters, Senden des ersten Signals zum Kombinierer und Senden des zweiten Signals zum Kombinierer; und Steuern eines Status des ersten Schalters und Übertragen des ersten Signals und des zweiten Signals von der ersten Antenne durch sequenzielles Verwenden des Kombinierers und des ersten Schalters.

6. Verfahren nach Anspruch 5, wobei
das Hochfrequenz-Frontend-Modul (220) ferner einen dritten Schalter (224) umfasst; das Senden des zweiten Signals zum Kombinierer (221) Folgendes umfasst:
dann, wenn die Drahtloskommunikationsvorrichtung in einem ersten Kommunikationsszenario ist, Steuern durch die Verarbeitungsschaltung (210) eines Status des dritten Schalters und Senden des zweiten Signals zum Kombinierer; und
das Verfahren ferner Folgendes umfasst:
dann, wenn die Drahtloskommunikationsvorrichtung (200) in einem zweiten Kommunikationsszenario ist, Steuern durch die Verarbeitungsschaltung eines Status des dritten Schalters und eines Status des ersten Schalters und Übertragen des zweiten Signals von der ersten Antenne (231) durch sequenzielles Verwenden des dritten Schalters und des ersten Schalters.

7. Verfahren nach Anspruch 6, wobei das Verfahren ferner Folgendes umfasst:
dann, wenn die Drahtloskommunikationsvorrichtung (200) im ersten Kommunikationsszenario ist, Steuern durch die Verarbeitungsschaltung (210) des Status des dritten Schalters (224) und eines Status des ersten Schalters (222) und Empfangen eines dritten Signals von der ersten Antenne (231) durch sequenzielles Verwenden des ersten Schalters, des Kombinierers (221) und des dritten Schalters; und
dann, wenn die Drahtloskommunikationsvorrichtung im zweiten Kommunikationsszenario ist, Steuern durch die Verarbeitungsschaltung des Status des dritten Schalters und des Status des ersten Schalters und Empfangen eines vierten Signals von der ersten Antenne durch sequenzielles Verwenden des ersten Schalters und des dritten Schalters, wobei das dritte Signal und das vierte Signal Signale des zweiten Netzes sind.

8. Verfahren nach Anspruch 6, wobei das erste Kommunikationsszenario ein EN-DC-Szenario umfasst und das zweite Kommunikationsszenario ein Szenario umfasst, in dem lediglich ein 4G-Netz vorhanden ist.

9. Hochfrequenz-Frontend-Modul (220), das einen ersten Schalter (222), einen zweiten Schalter (223), einen dritten Schalter (224) und einen Kombinierer (221) umfasst, wobei
der zweite Schalter an eine Verarbeitungsschaltung (210), eine dritte Antenne (233), eine vierte Antenne (234), eine fünfte Antenne (235) und den Kombinierer (221) getrennt gekoppelt ist und zu Folgendem konfiguriert ist: in einem ersten Kommunikationsszenario Empfangen eines ersten Signals von der Verarbeitungsschaltung und Senden des ersten Signals der Reihe nach zu der dritten Antenne, der vierten Antenne, der fünften Antenne und dem Kombinierer auf der Grundlage einer Steuerung der Verarbeitungsschaltung;
der dritte Schalter an die Verarbeitungsschaltung, den Kombinierer und den ersten Schalter getrennt gekoppelt ist und zu Folgendem konfiguriert ist: im ersten Kommunikationsszenario Empfangen eines zweiten Signals von der Verarbeitungsschaltung und Senden des zweiten Signals zum Kombinierer auf der Grundlage einer Steuerung der Verarbeitungsschaltung; und in einem zweiten Kommunikationsszenario Empfangen eines zweiten Signals von der Verarbeitungsschaltung und Senden des zweiten Signals zum ersten Schalter auf der Grundlage einer Steuerung der Verarbeitungsschaltung;
der Kombinierer an den ersten Schalter, den zweiten Schalter und den dritten Schalter getrennt gekoppelt ist und zu Folgendem konfiguriert ist: im ersten Kommunikationsszenario Empfangen des zweiten Signals vom dritten Schalter, Empfangen des ersten Signals vom zweiten Schalter, Kombinieren des ersten Signals und des zweiten Signals und Senden eines kombinierten Signals, das durch eine Kombination erhalten wird, zum ersten Schalter; und
der erste Schalter an den Kombinierer, den dritten Schalter, eine erste Antenne und eine zweite Antenne getrennt gekoppelt ist und zu Folgendem konfiguriert ist: im ersten Kommunikationsszenario Empfangen des kombinierten Signals und Übertragen des kombinierten Signals von der ersten Antenne auf der Grundlage einer Steuerung der Verarbeitungsschaltung; und im zweiten Kommunikationsszenario Empfangen des zweiten Signals und Übertragen des zweiten Signals von der ersten Antenne auf der Grundlage einer Steuerung der Verarbeitungsschaltung.

10. Chip, der mindestens einen Prozessor (801), einen Speicher (803) und eine Schnittstelle (802) umfasst, wobei der Prozessor durch die Schnittstelle an ein Hochfrequenz-Frontend-Modul (220) gekoppelt ist und der mindestens eine Prozessor konfiguriert ist, Befehle aufzurufen, die im Speicher gespeichert sind, um einen Schritt des Durchführens einer Signalübertragung im Verfahren nach einem der Ansprüche 5 bis 8 durchzuführen.

11. Computerlesbares Speichermedium, wobei das computerlesbare Speichermedium ein Computerprogramm speichert und dann, wenn das Computerprogramm in einem Computer oder einem Prozessor ausgeführt wird, dem Computer oder dem Prozessor ermöglicht wird, einen Schritt durchzuführen, der durch die Verarbeitungsschaltung (210) im Verfahren nach einem der Ansprüche 5 bis 8 durchgeführt wird.

12. Computerprogrammprodukt, wobei das Computerprogrammprodukt ein Software-Programm umfasst und dann, wenn das Software-Programm durch einen Computer oder einen Prozessor ausgeführt wird, ermöglicht wird, dass ein Schritt durchgeführt wird, der durch die Verarbeitungsschaltung (210) im Verfahren nach einem der Ansprüche 5 bis 8 durchgeführt wird.

## Revendications

1. Appareil de communication sans fil (200), comprenant :
un groupe d'antennes (230), comprenant une première antenne (231), une deuxième antenne (232), une troisième antenne (233), une quatrième antenne (234), et une cinquième antenne (235) ;
un module frontal radiofréquence (220), comprenant un combineur (221), le combineur étant couplé à la première antenne ; et
un circuit de traitement (210), couplé au combineur et au groupe d'antennes, et configuré pour :
transmettre un premier signal depuis successivement la troisième antenne, la quatrième antenne, et la cinquième antenne ; et
envoyer le premier signal et un deuxième signal au combineur, et transmettre le premier signal et le deuxième signal depuis la première antenne au moyen du combineur,
le premier signal étant un signal de référence de sondage, dit SRS, d'un premier réseau, et le deuxième signal étant un signal d'un deuxième réseau ;
dans lequel
le module frontal radiofréquence (220) comprend en outre un premier commutateur (222) et un deuxième commutateur (223), le combineur (221) est couplé au premier commutateur, le premier commutateur est couplé à la première antenne (231) et à la deuxième antenne (232), et le deuxième commutateur est couplé à la troisième antenne (233), à la quatrième antenne (234), à la cinquième antenne (235), et au combineur ; et le circuit de traitement (210) est couplé en outre au premier commutateur et au deuxième commutateur, et est configuré pour : commander un état du deuxième commutateur, et transmettre le premier signal depuis successivement la troisième antenne, la quatrième antenne, et la cinquième antenne ; commander l'état du deuxième commutateur, envoyer le premier signal au combineur, et envoyer le deuxième signal au combineur ; et commander un état du premier commutateur, et transmettre le premier signal et le deuxième signal depuis la première antenne au moyen du combineur puis du premier commutateur.

2. Appareil de communication sans fil (200) selon la revendication 1, dans lequel
le module frontal radiofréquence (220) comprend en outre un troisième commutateur (224), le troisième commutateur étant couplé au premier commutateur (222) et au combineur (221) ;
le circuit de traitement (210) est couplé en outre au troisième commutateur, et est configuré pour :
dans un premier scénario de communication, commander un état du troisième commutateur, et envoyer le deuxième signal au combineur ; et
le circuit de traitement est configuré en outre pour :
dans un deuxième scénario de communication, commander un état du troisième commutateur et un état du premier commutateur, et transmettre le deuxième signal depuis la première antenne (231) au moyen du troisième commutateur puis du premier commutateur.

3. Appareil de communication sans fil (200) selon la revendication 2, dans lequel le circuit de traitement (210) est configuré en outre pour :
dans le premier scénario de communication, commander l'état du troisième commutateur (224) et un état du premier commutateur (222), et recevoir un troisième signal depuis la première antenne (231) au moyen du premier commutateur puis du combineur (221) puis du troisième commutateur ; et
dans le deuxième scénario de communication, commander l'état du troisième commutateur et l'état du premier commutateur, et recevoir un quatrième signal depuis la première antenne au moyen du premier commutateur puis du troisième commutateur,
le troisième signal et le quatrième signal étant des signaux du deuxième réseau.

4. Appareil de communication sans fil (200) selon la revendication 2, dans lequel le premier scénario de communication comprend un scénario EN-DC ; et le deuxième scénario de communication comprend un scénario dans lequel seul un réseau 4G est présent.

5. Procédé de transmission de signal, le procédé étant appliqué à un appareil de communication sans fil (200), l'appareil comprenant un circuit de traitement (210), un module frontal radiofréquence (220), et un groupe d'antennes (230), le module frontal radiofréquence comprenant un combineur (221), le groupe d'antennes comprenant une première antenne (231), une deuxième antenne (232), une troisième antenne (233), une quatrième antenne (234), et une cinquième antenne (235), et le procédé comprenant :
la transmission, par le circuit de traitement, d'un premier signal depuis successivement la troisième antenne, la quatrième antenne, et la cinquième antenne ; et l'envoi du premier signal et d'un deuxième signal au combineur, et la transmission du premier signal et du deuxième signal depuis la première antenne au moyen du combineur,
le premier signal étant un signal de référence de sondage, dit SRS, d'un premier réseau, et le deuxième signal étant un signal d'un deuxième réseau ;
dans lequel
le module frontal radiofréquence (220) comprend en outre un premier commutateur (222) et un deuxième commutateur (223) ; la transmission, par le circuit de traitement (210), d'un premier signal depuis successivement la troisième antenne (233), la quatrième antenne (234), et la cinquième antenne (235) comprend :
la commande, par le circuit de traitement, d'un état du deuxième commutateur, et la transmission du premier signal depuis successivement la troisième antenne, la quatrième antenne, et la cinquième antenne ; et
l'envoi du premier signal et d'un deuxième signal au combineur (221), et la transmission du premier signal et du deuxième signal depuis la première antenne au moyen du combineur comprend :
la commande, par le circuit de traitement, de l'état du deuxième commutateur, l'envoi du premier signal au combineur, et l'envoi du deuxième signal au combineur ; et la commande d'un état du premier commutateur, et la transmission du premier signal et du deuxième signal depuis la première antenne au moyen du combineur puis du premier commutateur.

6. Procédé selon la revendication 5,
le module frontal radiofréquence (220) comprenant en outre un troisième commutateur (224) ;
l'envoi du deuxième signal au combineur (221) comprenant :
lorsque l'appareil de communication sans fil se trouve dans un premier scénario de communication, la commande, par le circuit de traitement (210), d'un état du troisième commutateur, et l'envoi du deuxième signal au combineur ; et
le procédé comprenant en outre :
lorsque l'appareil de communication sans fil (200) se trouve dans un deuxième scénario de communication, la commande, par le circuit de traitement, d'un état du troisième commutateur et d'un état du premier commutateur, et la transmission du deuxième signal depuis la première antenne (231) au moyen du troisième commutateur puis du premier commutateur.

7. Procédé selon la revendication 6, le procédé comprenant en outre :
lorsque l'appareil de communication sans fil (200) se trouve dans le premier scénario de communication, la commande, par le circuit de traitement (210), de l'état du troisième commutateur (224) et d'un état du premier commutateur (222), et la réception d'un troisième signal depuis la première antenne (231) au moyen du premier commutateur puis du combineur (221) puis du troisième commutateur ; et
lorsque l'appareil de communication sans fil se trouve dans le deuxième scénario de communication, la commande, par le circuit de traitement, de l'état du troisième commutateur et de l'état du premier commutateur, et la réception d'un quatrième signal depuis la première antenne au moyen du premier commutateur puis du troisième commutateur, le troisième signal et le quatrième signal étant des signaux du deuxième réseau.

8. Procédé selon la revendication 6, dans lequel le premier scénario de communication comprend un scénario EN-DC ; et le deuxième scénario de communication comprend un scénario dans lequel seul un réseau 4G est présent.

9. Module frontal radiofréquence (220), comprenant un premier commutateur (222), un deuxième commutateur (223), un troisième commutateur (224), et un combineur (221), dans lequel
le deuxième commutateur est couplé séparément à un circuit de traitement (210), à une troisième antenne (233), à une quatrième antenne (234), à une cinquième antenne (235), et au combineur (221), et est configuré pour : dans un premier scénario de communication, recevoir un premier signal depuis le circuit de traitement, et envoyer le premier signal successivement à la troisième antenne, à la quatrième antenne, à la cinquième antenne, et au combineur sur la base d'une commande du circuit de traitement ;
le troisième commutateur est couplé séparément au circuit de traitement, au combineur, et au premier commutateur, et est configuré pour : dans le premier scénario de communication, recevoir un deuxième signal depuis le circuit de traitement, et envoyer le deuxième signal au combineur sur la base d'une commande du circuit de traitement ; et, dans un deuxième scénario de communication, recevoir un deuxième signal depuis le circuit de traitement, et envoyer le deuxième signal au premier commutateur sur la base d'une commande du circuit de traitement ;
le combineur est couplé séparément au premier commutateur, au deuxième commutateur, et au troisième commutateur, et est configuré pour : dans le premier scénario de communication, recevoir le deuxième signal depuis le troisième commutateur, recevoir le premier signal depuis le deuxième commutateur, combiner le premier signal et le deuxième signal, et envoyer un signal combiné obtenu par combinaison au premier commutateur ; et
le premier commutateur est couplé séparément au combineur, au troisième commutateur, à une première antenne, et à une deuxième antenne, et est configuré pour : dans le premier scénario de communication, recevoir le signal combiné, et transmettre le signal combiné depuis la première antenne sur la base d'une commande du circuit de traitement ; et, dans le deuxième scénario de communication, recevoir le deuxième signal, et transmettre le deuxième signal depuis la première antenne sur la base d'une commande du circuit de traitement.

10. Puce, comprenant au moins un processeur (801), une mémoire (803), et une interface (802), dans laquelle
le processeur est couplé à un module frontal radiofréquence (220) par l'intermédiaire de l'interface ; et
l'au moins un processeur est configuré pour invoquer des instructions stockées dans la mémoire, afin de réaliser une étape de réalisation d'une transmission de signal dans le procédé selon l'une quelconque des revendications 5 à 8.

11. Support de stockage lisible par ordinateur, le support de stockage lisible par ordinateur stockant un programme d'ordinateur, et l'exécution du programme d'ordinateur sur un ordinateur ou un processeur permettant à l'ordinateur ou au processeur de réaliser une étape réalisée par le circuit de traitement (210) dans le procédé selon l'une quelconque des revendications 5 à 8.

12. Produit-programme d'ordinateur, le produit programme d'ordinateur comprenant un programme logiciel, et l'exécution du programme logiciel par un ordinateur ou un processeur permettant la réalisation d'une étape réalisée par le circuit de traitement (210) dans le procédé selon l'une quelconque des revendications 5 à 8.
